(19) Europäisches Patentamt
European Patent Office
Office européen des brevets

(11) **EP 4 614 041 B1**

(12) **EUROPEAN PATENT SPECIFICATION**

(45) Date of publication and mention
of the grant of the patent:
**29.07.2026 Bulletin 2026/31**

(21) Application number: **24161539.2**

(22) Date of filing: **05.03.2024**

(51) International Patent Classification (IPC):
*F16K 27/02* (2006.01)  *F25B 41/345* (2021.01)
*F16K 1/42* (2006.01)  *F16K 31/06* (2006.01)
*F25B 41/31* (2021.01)  *F16K 1/46* (2006.01)

(52) Cooperative Patent Classification (CPC):
**F16K 31/0655; F16K 1/427; F16K 1/465;
F25B 41/31**

(54) **VALVE FOR A COOLING SYSTEM**

VENTIL FÜR EIN KÜHLSYSTEM

SOUPAPE POUR UN SYSTÈME DE REFROIDISSEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**10.09.2025 Bulletin 2025/37**

(73) Proprietor: **Siemens Schweiz AG
8047 Zürich (CH)**

(72) Inventors:
• **Ernstberger, Pascal
76437 Rastatt (DE)**
• **Krawiec, Grzegorz
63-500 Ostrzesow (PL)**
• **Petry, Karl-Heinz
8864 Reichenburg (CH)**
• **Sauerer, Daniel
76479 Steinmauern (DE)**

(74) Representative: **Siemens Patent Attorneys
Postfach 22 16 34
80506 München (DE)**

(56) References cited:
**EP-A1- 0 849 515     CN-A- 116 906 656
US-A- 4 534 537**

**Description**

Background

The present disclosure relates to a valve for a cooling system. The cooling system comprises the valve for controlling a flow of a medium passing through a pipe part of a pipe system. The medium is distributed via the pipe system to a plurality of consumer devices and/or thermal energy exchangers. The cooling system can comprise a common source and the pipe system can connect to the common source.

In commercial and/or industrial and/or residential buildings, several applications are known which make use of a pipe system. The pipe system distributes a medium to various consumer devices spread over the building. The medium typically originates from a common source.

A pipe system may be or comprise a closed circuit. The closed circuit comprises one or more supply pipes connecting the common source with each of the consumer devices. The closed circuit also comprises one or more return pipes connecting each of the consumer devices back to the common source.

The consumer devices preferably comprise thermal energy exchangers. The consumer devices ideally are thermal energy exchangers. More specifically, the consumer devices can comprise cold exchange systems. The consumer devices can even be cold exchange systems.

The pipe system may also be or comprise an open circuit. The open circuit comprises one or more supply pipes connecting the common source with each of the consumer devices. In contrast to closed circuits, there is no return pipe that connects every consumer device back to the common source.

A pipe system can still be a combination of a closed circuit and an open circuit.

These systems can include valves such as control valves having adjustable orifice systems for controlling the flow of a medium to the respective consumer device. A position of an adjustable orifice of the adjustable orifice system determines the amount of medium passing through the consumer device per time unit. In cold exchange applications, this means that the position of the orifice determines an amount of cooling delivered from the thermal energy exchanger to an adjacent structure. The adjacent structure preferably comprises an adjacent room of a building. The adjacent space ideally is an adjacent room of a building. The adjacent structure can also comprise an adjacent appliance or a space thereof. The adjacent structure can still be an adjacent appliance or a space thereof.

The flow rate of a medium passing through the consumer device depends, among other factors, on the adjustable orifice. The adjustable orifice of a valve such as an expansion valve comprises a valve seat and a valve element such as a plunger. Known adjustable orifices comprise ball-type adjustable orifices and orifices of globe valves.

An adjustable orifice of a valve functions to enable flow through the valve when the adjustable orifice is in an open position. An adjustable orifice of a valve functions to obturate flow through the valve when the adjustable orifice is in a closed position. In certain applications, the adjustable orifice is expected to close tightly when the adjustable orifice is in the closed position. In other words, in the closed position of the adjustable orifice there will be zero flow through the valve.

An adjustable orifice of a valve of a cooling system is a mechanical part and as such is prone to mechanical wear. The parts of the adjustable orifice such as the valve element and the valve seat are expected to not leak even after many valve cycles. Those parts of the adjustable orifice are also expected to not leak after several years in service.

The adjustable orifice is also expected to close and/or to open a fluid path throughout the entire applicable temperature range. In cooling systems, the temperature range begins at temperatures such as 200 Kelvins or 210 Kelvins or 213 Kelvins or 220 Kelvins. The temperature range can also begin at any temperature in between the aforementioned temperatures. The temperature range ends at temperatures such as 410 Kelvins or 430 Kelvins or 433 Kelvins or 440 Kelvins. The temperature range can also end at any temperature in between the aforementioned temperatures. More specifically, temperature ranges can begin at 213 Kelvins and can end at 433 Kelvins. Temperature ranges can also begin at 210 Kelvins and end at 440 Kelvins. Temperature ranges can still begin at 220 Kelvins and end at 430 Kelvins.

A patent US6435207B1 issued on 20 August 2022. US6435207B1 deals with a flow regulation fitting. The patent US6435207B1 claims a priority date of 21 December 1996.

A control system for pipe systems is known from US6435207B1. The patent US6435207B1 describes a flow regulation control valve for setting and measuring volume flow in pipes. The flow regulation control valve comprises a shut-off member arranged in a flow chamber, for setting a desired flow state. A sensor is arranged in or adjacent the flow chamber, for sensing a value representative of a flow through the flow chamber.

The flow regulation control valve further comprises an evaluation unit. The evaluation unit determines the flow from the signal recorded by the sensor and from the characteristic values of the control valve. Those characteristic values are stored in an electronic data store at the sensor and are valve specific. A flow rate through a section of the pipe system is manually adjusted using the shut-off member of the flow regulation control valve. The flow rate is adjusted until the desired flow is displayed by the evaluation unit. One or more seals prevent escape of a medium through a bore of the valve of US6435207B1.

A patent application WO98/25086A1 was filed on 4 December 1997. The application was published on 11 June 1998. A priority date of 4 December 1996 is claimed. WO98/25086A1 discloses a modulating fluid control device for a fluid-based heating and cooling system for a measured environment.

The control device comprises a body, a supply port and a return port and a valve located between these ports. A plug of the valve connects to an actuator. The actuator and the plug are responsive to input from a sensor and from a controller. A flow of a medium through the valve is thereby restricted, the restriction depending on conditions in the measured environment. The control device is provided with a valve controller and an actuator to position the valve and thereby regulate flow through that valve. A flow sensor is associated with the valve and records the flow of the medium at a location in the system. The flow sensor provides a signal indicative of that flow rate to the valve controller. The flow sensor and the valve controller maintain a required flow rate through the system as recorded by the sensor. The system thereby promotes desired environmental conditions in a space.

A European patent application EP3839308A1 was filed by SIEMENS SCHWEIZ AG on 20 December 2019. The application was published on 23 June 2021. EP3839308A1 deals with an expansion valve. The valve comprises an inlet port, an outlet port, and an adjustable orifice situated in a fluid path between the inlet port and the outlet port. The adjustable orifice system corresponds to a globe valve and comprises the adjustable orifice and an armature. An electric current through a solenoid causes movement of the armature and of the adjustable orifice. The solenoid is directly immersed in a refrigerant.

A patent US5419365A was granted on 30 May 1995 and deals with a pressure regulator for water blasting. US5419365A discloses a valve having a replaceable cartridge. An adaptor fitting secures the replaceable cartridge to the body of the valve. A plunger of the valve engages a valve element of the replaceable cartridge. A seal is arranged between the valve member and the seat member of the valve of US5419365A. The seal prevents leakage.

A patent US5730423A was granted on 24 March 1998. A corresponding application 08/731,517 was filed on 16 October 1996. The patent US5730423A deals with an all metal diaphragm valve. The valve of US5730423A comprises a valve chamber having a toroidal bead. In the closed position, the bead abuts a diaphragm of the valve, the diaphragm being arranged in between the bead and an actuator. A patent application CN116906656A was filed by ZHEJIANG KEBO ELECTRICAL APPLIANCES CO LTD on 11 August 2023. The application was published on 20 October 2023. CN116906656A deals with a water drainage electromagnetic valve, according to the preamble of claim 1.

The present disclosure deals with a valve for a cooling system wherein the adjustable orifice of the valve is improved. The valve can, by way of example, be an expansion valve in the cooling system.

Summary

The adjustable orifice of the valve of the present disclosure comprises a valve member in the form of a plunger. The adjustable orifice also comprises a valve seat assembly having a valve seat in the form of a gasket. The plunger cooperates with the gasket to close and to open the valve. More specifically, the plunger in the closed position abuts the gasket. In the open position, the plunger is detached from the gasket.

The tip end of the plunger has the shape of a receptacle with a head portion pointing toward the gasket. An edge is provided at end of the head. In the closed position, the edge abuts the gasket thereby closing the valve.

The plunger and the gasket can be made of materials that ensure longevity. For example, the plunger can be made of a metal such as (stainless) steel whereas the gasket is made of a polymeric material. The material of the gasket is generally more ductile than the material of the (circular edge of the) plunger.

To arrive at a more versatile solution, an adaptor such as a flow control adaptor is employed. The adaptor is part of the valve seat assembly. That is, different adaptors can be used in a valve that remains otherwise unchanged.

While the valve member and/or the plunger are moving parts, the gasket is not configured to move during operation of the valve.

Like the gasket, the adaptor provides an aperture and/or a bore for enabling a flow of a fluid between the ports of the valve. The fluid can be a refrigerant fluid. It can be liquid and/or gaseous. The fluid can also be superheated.

The gasket is mounted on a seat surface of the seat assembly. That is, a surface of the gasket abuts the seat surface. A rim such as a circular rim projects from the seat surface. The seat surface is smooth except for the rim projecting from the seat surface, the seat surface and the rim being unitary. More specifically, the seat surface is smooth except for the circular rim projecting from the seat surface, the seat surface and the circular rim being unitary.

When the gasket is pressed against the rim, the gasket is deformed. An annular groove is formed in the gasket and the projecting rim fits in the annular groove. The gasket is pressed against the projecting rim such that the rim imbeds itself in the gasket. More specifically, a circular rim projecting from the seat surface imbeds itself in the gasket. Hence, the arrangement becomes fluid tight, and the rim retains the gasket. The rim retains the gasket even when a temperature of a refrigerant in the valve changes. No further gasket and no further O-ring will be required to retain the gasket.

The gasket is made of a material that is more ductile than the circular rim. The gasket is also made of a material that is more ductile than the seat surface. The gasket can, by way of non-limiting example, be made of a polymeric material. The seat surface and the rim can, by way of non-limiting example, be made of a metal such as steel or aluminum or an alloy thereof.

The rim projects from the seat surface and can comprise a circular projecting rim. The rim projects from the seat surface and can be a circular projecting rim. In an embodiment, the rim projects from the seat surface and comprises an edge such as an annular edge. In a special embodiment, the rim projects from the seat surface and is an edge such as an annular edge.

The portion of the rim or the portion of the edge that points toward the gasket can be tapered. The portion of the rim or the portion of the edge that points toward the gasket is preferably tapered at an obtuse angle. The obtuse angle can, by way of non-limiting example, exceed 105° or be 120° or be less than 135°. The obtuse angle can, by way of another non-limiting example, be substantially 120°. The angle can be between 119° and 121°.

Likewise, the portion of the circular rim or the portion of the annular edge that points toward the gasket can be tapered. The portion of the circular rim or the portion of the annular edge that points toward the gasket is preferably tapered at an obtuse angle. The obtuse angle can, by way of non-limiting example, exceed 105° or be 120° or be less than 135°. The obtuse angle can, by way of another non-limiting example, be substantially 120°. The angle can be between 119° and 121°.

It is envisaged that more than one rim projects from the surface of the seat of the assembly. More specifically, two rims or three rims can project from the surface of the seat. These rims project from the surface of the seat toward the gasket. The seat surface and the rims projecting from the seat surface are ideally unitary.

In other words, more than one rim imbeds itself into the gasket when the gasket is pressed against the seat. A plurality of grooves is thus formed in the gasket. The number of grooves in the gasket is commensurate with the number of rims projecting from the surface of the seat. Hence, the arrangement becomes even more fluid tight, and the rims retain the gasket. The rims retain the gasket even when a temperature of a refrigerant in the valve changes. No further gasket and no further O-ring will be required to retain the gasket.

It is still envisaged that more than one circular rim projects from the surface of the seat of the assembly. More specifically, two circular rims or three circular rims can project from the surface of the seat. These circular rims project from the surface of the seat toward the gasket. The circular rims are preferably concentric. The seat surface and the circular rims projecting from the seat surface are ideally unitary.

In other words, more than one circular rim imbeds itself into the gasket when the gasket is pressed against the seat. A plurality of grooves is thus formed in the gasket. The number of grooves in the gasket is commensurate with the number of circular rims projecting from the surface of the seat. Hence, the arrangement becomes even more fluid tight, and the circular rims retain the gasket. The circular rims retain the gasket even when a temperature of a refrigerant in the valve changes. No further gasket and no further O-ring will be required to retain the gasket.

It is envisaged that more than one edge projects from the surface of the seat of the assembly. More specifically, two edges or three edges can project from the surface of the seat. These edges project from the surface of the seat toward the gasket. The seat surface and the edges projecting from the seat surface are ideally unitary.

In other words, more than one edge imbeds itself into the gasket when the gasket is pressed against the seat. A plurality of grooves is thus formed in the gasket. The number of grooves in the gasket is commensurate with the number of edges projecting from the surface of the seat. Hence, the arrangement becomes even more fluid tight, and the edges retain the gasket. The edges retain the gasket even when a temperature of a refrigerant in the valve changes. No further gasket and no further O-ring will be required to retain the gasket.

It is still envisaged that more than one annular edge projects from the surface of the seat of the assembly. More specifically, two annular edges or three annular edges can project from the surface of the seat. These annular edges project from the surface of the seat toward the gasket. The annular edges are preferably concentric. The seat surface and the annular edges projecting from the seat surface are ideally unitary.

In other words, more than one annular edge imbeds itself into the gasket when the gasket is pressed against the seat. A plurality of grooves is thus formed in the gasket. The number of grooves in the gasket is commensurate with the number of annular edges projecting from the surface of the seat. Hence, the arrangement becomes even more fluid tight, and the annular edges retain the gasket. The annular edges retain the gasket even when a temperature of a refrigerant in the valve changes. No further gasket and no further O-ring will be required to retain the gasket.

Each portion of a rim or each portion of an edge that points toward the gasket can be tapered. The portions of the rims or the portions of the edges that point toward the gasket are preferably each tapered at an obtuse angle. The obtuse angle can, by way of non-limiting example, exceed 105° or be 120° or be less than 135°. The obtuse angle $\alpha$ can, by way of another non-limiting example, be substantially 120°:

$$\alpha \approx 120°$$

The angle $\alpha$ can be between 119° and 121°:

$$119° \leq \alpha \leq 121°$$

The portions of the rims or the portions of the edges that point toward the gasket are preferably tapered each at substantially the same obtuse angle.

The portions of the rims or the portions of the edges that point toward the gasket are ideally tapered each at substantially the same obtuse angle.

Likewise, each portion of a circular rim or each portion of an annular edge that points toward the gasket can be tapered. The portions of the circular rims or the portions of the annular edges that point toward the gasket are preferably tapered at an obtuse angle. The obtuse angle can, by way of non-limiting example, exceed 105° or be 120° or be less than 135°. The obtuse angle $\alpha$ can, by way of another non-limiting example, be substantially 120°:

$$\alpha \approx 120°$$

The angle $\alpha$ can be between 119° and 121°:

$$119° \leq \alpha \leq 121°$$

The portions of the circular rims or the portions of the annular edges pointing toward the gasket are preferably tapered each at substantially the same obtuse angle. The portions of the circular rims or the portions of the annular edges pointing toward the gasket are ideally tapered each at substantially the same obtuse angle.

Brief description of the drawings

Various features will become apparent to those skilled in the art from the following detailed description of the disclosed non-limiting embodiments. The drawings that accompany the detailed description can be briefly described as follows:

    FIG 1 is a schematic of a valve such as a valve for a cooling circuit.
    FIG 2 depicts details of the valve seat assembly of the valve shown in FIG 1.
    FIG 3 shows details of the valve seat of the valve seat assembly.
    FIG 4 illustrates details of the edge and/or of the rim.
    FIG 5 shows an assembly with more than one edge and/or with more than one rim.

Detailed description

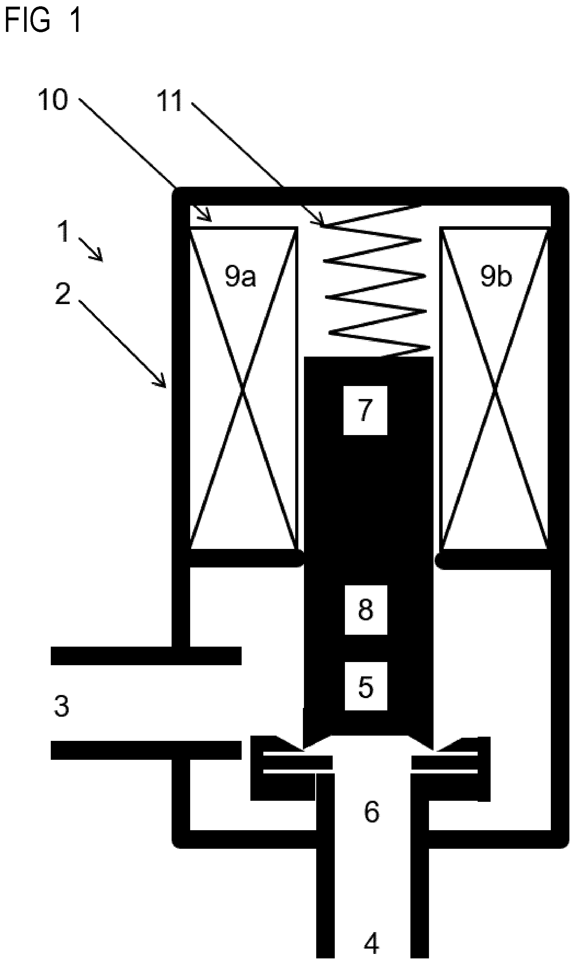

FIG 1 shows the various components of a valve 1 of the instant disclosure. The valve 1 advantageously is or comprises an expansion valve. Yet more advantageously the valve 1 is or comprises an electronic expansion valve. The valve 1 can be installed in a refrigeration-vapour circuit. The valve 1 in accordance with at least one embodiment is advantageously part of a refrigeration-vapour circuit.

The valve 1 comprises a housing 2. The valve housing 2 has sides defining a first port 3 and a second port 4. In an embodiment, the first port 3 comprises a first conduit. It is also envisaged that the second port 4 comprises a second conduit. According to an aspect of the instant disclosure, the first port 3 is an inlet port and the second port 4 is an outlet port. According to another aspect of the instant disclosure, the first port 3 is an outlet port and the second port 4 is an inlet port.

It is envisaged that a valve body is or comprises the housing 2. In an embodiment, the housing 2 comprises a metallic material such as steel, especially austenitic (stainless) steel and/or ferrite steel. In an alternate embodiment, the housing 2 comprises aluminum (alloy) or gunmetal or brass. In yet another alternate embodiment, the housing 2 comprises a polymeric material. According to an aspect, the housing 2 is manufactured using an additive manufacturing technique such as three-dimensional printing. Manufacture of the housing 2 can, in a specific embodiment, involve selective laser sintering. It is still envisaged that the housing 2 comprises a grey cast material.

In a special embodiment, the housing 2 is non-unitary. A non-unitary and/or modular housing 2 affords a valve 1 that can be adapted to various values of nominal flow.

The first port 3 and the second port 4 are in fluid communication with each other to afford flow of a fluid through the valve 1. In a preferred embodiment, the fluid comprises a refrigerant. The fluid may, by way of non-limiting example, be a R32, R134a, R290, R410A, R450A, R452A, R513A, R454C, R1234yf, or a R1234ze(E) refrigerant. The fluid at the inlet port advantageously is a liquid and/or a gaseous fluid. The fluid at the outlet port preferably is a two-phase fluid.

A fluid path extends between the first port 3 and the second port 4. A plunger 5 is situated in the fluid path. The plunger 5 is linearly movable. The plunger 5 can also be axially movable. The plunger 5 cooperates with a valve seat assembly 6. The plunger 5 thereby varies and limits a flow rate of the fluid through the valve 1.

The plunger 5 comprises a head portion. The head portion protrudes from the plunger 5. Ideally, the head portion protrudes from the plunger 5 in the direction of the valve seat assembly 6. According to an aspect, the plunger 5 comprises a body portion. The head portion protrudes from the body portion of the plunger 5. Ideally, the head portion protrudes from the body portion of the plunger 5 in the direction of the valve seat assembly 6. According to an aspect, the plunger 5 comprises a receptacle portion. The head portion protrudes from the receptacle portion of the plunger 5. Ideally, the head portion protrudes from the receptacle portion of the plunger 5 in the direction of the valve seat assembly 6.

The plunger 5 comprises an end pointing toward the valve seat assembly 6. The end of the plunger 5 can have the shape of a receptacle and/or of an inverted bowl. The shape of the end of the plunger 5 can be such that the opening of the receptacle points toward the valve seat assembly 6.

In an embodiment, the plunger 5 comprises an axial bore. The axial bore through the plunger 5 affords compensation of pressure within the valve 1.

Advantageously, the head portion comprises the end pointing toward the valve seat assembly 6. The end of the plunger 5 and/or of the head portion can comprise a circular edge pointing toward the valve seat assembly 6. The edge can be a sharp edge with an acute angle. That is, the edge tapers toward the valve seat assembly 6 and that tapering defines an acute angle. The acute angle can, by way of example, be less than twenty degrees or less than ten degrees or even less than five degrees.

The edge at the end of the plunger 5 preferably is or comprises a rim. The edge at the end of the plunger 5 follows a closed continuous line. The edge at the end of the plunger 5 can also follow a closed continuous and circular line.

FIG 1 shows the valve seat assembly 6 as part of the second port 4. A skilled person having reviewed the embodiments disclosed herein understands that the first port 3 can also comprise the valve seat assembly 6. The skilled person also understands that the assembly 6 can be separate from the first port 3 and can be separate from the second port 4.

In the embodiment shown in FIG 1, the plunger 5 is linearly movable by linear movement of the armature 7. An axial direction is defined by the linear movement of the plunger 5. That is, the plunger 5 is axially movable by axial movement of the armature 7. The armature 7 can mechanically connect to the plunger 5 via a stem 8. It is also envisaged that the armature 7 directly connects to the plunger 5. It is still envisaged that the armature 7 and the plunger 5 are unitary.

According to an aspect of the present disclosure, the armature 7, the stem 8, and the plunger 5 are unitary. That is, the stem 8 and the plunger 5 are both integral parts of the armature 7. Likewise, the armature 7 and the stem 8 are integral with the plunger 5.

According to another aspect of the present disclosure, the plunger 5 is configured to rotate by some extent with respect to the armature 7. The plunger 5 preferably rotates about an axis connecting the armature 7, the plunger 5, and/or the stem 8. In an embodiment, the plunger 5 is allowed to rotate by an articulation angle of 0.1 degrees or of 0.2 degrees or even of 0.5 degrees. A limited amount of articulation of the plunger 5 with respect to the armature 7 improves on the alignment of the arrangement.

At least a portion of the armature 7 may be surrounded by a solenoid 9a, 9b. Upon application of an electric current, the solenoid 9a, 9b produces a magnetic flux. This magnetic flux acts on the armature 7 thereby displacing the armature 7.

FIG 1 shows a valve 1 having a solenoid actuator. It is envisaged that other actuators such as hydraulic or pneumatic actuators can be used to actuate the stem 8 and the plunger 5. The valve 1 may also be actuated by a magnetic piston pump. This list of actuators is not exhaustive.

A tubular portion such as a can needs not envelope the armature 7 and/or the stem 8. That is, the armature 7 has an outer surface. In an embodiment, a portion of the outer surface of the armature 7 directly faces the solenoid 9a, 9b. In another embodiment, the outer surface of the armature 7 directly faces the solenoid 9a, 9b. Likewise, the solenoid 9a, 9b has an outer surface. In an embodiment, a portion of the outer surface of the solenoid 9a, 9b directly faces the armature 7. In another embodiment, the outer surface of the solenoid 9a, 9b directly faces the armature 7.

The solenoid 9a, 9b and the armature 7 are arranged in the same chamber 10 inside the housing 2. The chamber 10 is ideally filled with a liquid and/or with a gaseous fluid. The liquid and/or gaseous fluid inside the chamber 10 can, by way of non-limiting example, be a R32, R134a, R290, R410A, R450A, R452A, R513A, R454C, R1234yf, or a R1234ze(E) refrigerant.

This liquid and/or gaseous fluid is in direct contact with the outer surface of the portion of the armature 7 that is inside the chamber 10. The liquid and/or gaseous fluid also is in direct contact with the solenoid 9a, 9b.

According to an aspect of the instant disclosure, the solenoid 9a, 9b comprises a plurality of coils. It is envisaged that at least one coil or at least two coils or at least five coils of the solenoid 9a, 9b are directly exposed to the liquid and/or to the gaseous fluid in the chamber 10a. In a specific embodiment, all the coils of the solenoid 9a, 9b are directly exposed to the liquid and/or to the gaseous fluid. The solenoid 9a, 9b preferably comprises a helical solenoid.

FIG 1 shows a solenoid 9a, 9b comprising two parts. Advantageously, the two parts of the solenoid 9a, 9b electrically form a single solenoid 9a, 9b. That is, the two parts 9a, 9b of the solenoid are galvanically connected.

A resilient member 11 ensures that the valve 1 is a normally closed valve. The resilient member 11 couples to the armature 7. In a specific embodiment, the resilient member 11 mechanically connects to the armature 7.

The resilient member 11 urges the armature 7 and the plunger 5 to close the valve 1. To that end, the resilient member 11 urges the armature 7 and the plunger 5 toward the seat assembly 6. In a specific embodiment, the resilient member 11 urges the armature 7, the stem 8, and the plunger 5 to close the valve 1. To that end, the resilient member 11 urges the armature 7, the stem 8, and the plunger 5 toward the seat assembly 6. The member 11 preferably urges these movable members 7, 8, 5 toward the assembly 6 until the plunger 5 engages a cooperating member of the assembly 6. The plunger 5 advantageously engages the cooperating member of the assembly 6 in the closed position of the valve 1.

According to an aspect, the resilient member 11 comprises a compression spring. In one embodiment, the resilient member 11 comprises a helical compression spring.

FIG 1 shows a resilient member 11 in the form of a spring. It is envisaged that other resilient members such as ferromagnetic members urge the armature 7 and the plunger 5 to close the valve 1. It is envisaged that resilient members such as ferromagnetic members urge the armature 7, the stem 8, and the plunger 5 to close the valve 1. This list of resilient members is not exhaustive.

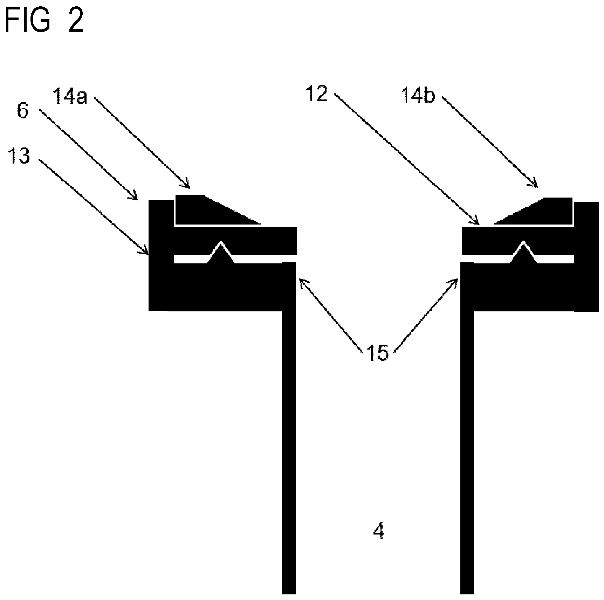

Now turning to FIG 2, details of the valve seat assembly 6 of the valve 1 are shown. The valve seat assembly 6 comprises a gasket 12 such as an annular seal. The gasket 12 can be made of an elastic material such as a polymeric material and/or a rubber material. The gasket 12 can, by way of non-limiting examples, be made of a polymeric material comprising at least one of:

- polytetrafluoroethylene,
- polyether ether ketone.

The polymeric material comprising polytetrafluoroethylene can also comprise graphite particles such as nodular graphite.

The gasket 12 can, by way of other non-limiting examples, be made of a polymeric material selected from:

- polytetrafluoroethylene or
- polyether ether ketone.

The gasket 12 provides an aperture to enable a flow of a fluid toward or from the first port 3. Likewise, the gasket 12 provides an aperture to enable a flow of a fluid toward or from the second port 4. In other words, the gasket 12 forms a hollow disk.

The aperture and/or the orifice of the gasket 12 is such that the plunger 5 cannot move into and out of the aperture and/or orifice of the gasket 12. In other words, the gasket 12 will eventually stop or inhibit movements of the plunger 5. That is, an inner diameter of the aperture and/or of the orifice of the gasket 12 is less than an outer diameter of the plunger 5. More specifically, the inner diameter of the aperture and/or of the orifice can be less than the outer diameter of the edge of the plunger 5. The inner diameter of the aperture and/or of the orifice can also be less than the outer diameter of the rim of the plunger 5. The inner diameter of the aperture and/or of the orifice can still be less than the outer diameter of the head portion of the plunger 5.

In an embodiment, the gasket 12 has cylindrical symmetry. It is also envisaged that the second port 4 has cylindrical symmetry. Ideally, the gasket 12 and the second port 4 both have cylindrical symmetry. The gasket 12 and the second port 4 can even exhibit cylindrical symmetry with respect to the same axis or with respect to substantially the same axis. This axis is advantageously defined by the linear movement of the plunger 5. This axis can also be defined by the axial movement of the plunger 5.

In a special embodiment, the gasket 12 and the aperture of the gasket 12 both have cylindrical symmetry. The gasket 12 and the aperture of the gasket 12 can even exhibit cylindrical symmetry with respect to the same axis or to substantially the same axis. This axis is advantageously defined by the linear movement of the plunger 5. This axis can also be defined by the axial movement of the plunger 5.

The gasket 12 can be mechanically mounted to a frame 13. The gasket 12 can also be mounted to a seat 15 of the assembly 6. In an embodiment, the gasket 12 is mounted to a seat 15 of the frame 13. Ideally, the frame 13 and the seat 15 are unitary.

In an embodiment, the frame 13 and/or the seat 15 mechanically connect the gasket 12 to the second port 4. It is envisaged that the seat 15 and the gasket 12 provide parallel surfaces. These parallel surfaces are perpendicular to a direction of flow through the second port 4 and/or to a symmetry axis of the second port 4. These parallel surfaces are also each perpendicular to an axial direction defined by the (movement of the) plunger 5. It is envisaged that the parallel surface of the gasket 12 abuts the parallel surface of the seat 15. That is, the gasket 12 sits on the seat 15.

In an embodiment, the frame 13 comprises a metallic material such as steel, especially austenitic (stainless) steel and/or ferrite steel. In an alternate embodiment, the frame 13 comprises aluminum (alloy) or gunmetal or brass. In yet another alternate embodiment, the frame 13 comprises a polymeric material. According to an aspect, the frame 13 is manufactured using an additive manufacturing technique such as three-dimensional printing. Manufacture of the frame 13 can, in a specific embodiment, involve selective laser sintering. It is still envisaged that the frame 13 comprises a grey cast material.

According to an aspect of the present disclosure, the housing 2 and the frame 13 are made of the same materials.

According to a special aspect of the present disclosure, the housing 2 and the frame 13 are unitary. When the housing 2 and the frame 13 form a single piece, the number of parts of the valve 1 can be lowered. Consequently, there are fewer parts that are prone to failure.

According to a related aspect of the present disclosure, the seat 15 comprises a metallic material such as steel. The steel material can, by way of non-limiting example, be selected from:

- austenite steel,
- ferrite steel,
- stainless steel.

In an alternate embodiment, the seat 15 comprises aluminum (alloy) or gunmetal or brass. In yet another alternate embodiment, the seat 15 comprises a polymeric material. According to an aspect, the seat 15 is manufactured using an additive manufacturing technique such as three-dimensional printing. Manufacture of the seat 15 can, in a specific embodiment, involve selective laser sintering. It is still envisaged that the seat 15 comprises a grey cast material.

According to another aspect of this disclosure, the frame 13 and the seat 15 each comprise a metallic material such as steel. The steel material can, by way of non-limiting example, be selected from:

- austenite steel,
- ferrite steel,
- stainless steel.

In an alternate embodiment, the frame 13 and the seat 15 each comprise aluminum (alloy) or gunmetal or brass. In yet another alternate embodiment, the frame 13 and the seat 15 each comprise a polymeric material. According to an aspect, the frame 13 and the seat 15 are manufactured using an additive manufacturing technique such as three-dimensional printing. Manufacture of the frame 13 and of the seat 15 can, in a specific embodiment, involve selective laser sintering. It is still envisaged that the frame 13 and the seat 15 each comprise a grey cast material.

The valve seat assembly 6 also comprises a flow control adaptor 14a, 14b. The flow control adaptor 14a, 14b is arranged such that the gasket 12 is arranged in between the flow control adaptor 14a, 14b and the valve port 4. Ideally, the gasket 12 is arranged in between the flow control adaptor 14a, 14b and (the aforementioned parallel surface of) the seat 15.

The flow control adaptor 14a, 14b can be mechanically mounted to a frame 13. The frame 13 thus mechanically connects the flow control adaptor 14a, 14b to the second port 4. It is envisaged that the flow control adaptor 14a, 14b and the gasket 12 provide parallel surfaces. These parallel surfaces are perpendicular to a direction of flow through the second port 4 and/or to a symmetry axis of the second port 4. These parallel surfaces are also each perpendicular to an axial direction defined by the (linear movement of the) plunger 5. These parallel surfaces are still each perpendicular to an axial direction defined by the (axial movement of the) plunger 5. It is envisaged that the parallel surface of the gasket 12 abuts the parallel surface of the flow control adaptor 14a, 14b.

In another embodiment, the flow control adaptor 14a, 14b and the plunger 5 are unitary. The number of parts of the valve 1 is thereby reduced. This results in a valve 1 that is more robust because there are fewer parts that are prone to failure.

That is, the gasket 12 has a first surface and a second surface, the second surface being different from the first surface. The second surface and the first surface of the gasket 12 are parallel. The first surface of the gasket 12 and the second surface of the gasket 12 are disposed on opposite sides of the gasket 12. The first surface of the gasket 12 faces and/or abuts the seat 15. The second surface of the gasket 12 faces and/or abuts the flow control adaptor 14a, 14b. The gasket 12 is advantageously squeezed in between the (a portion of the) seat 15 and the flow control adaptor 14a, 14b. In the closed position, the second surface of the gasket 12 also abuts the plunger 5 and/or the head portion of the plunger 5.

In operation, the gasket 12 can cooperate with the plunger 5 to close or open the valve 1. More specifically, the gasket 12 cooperates with a cooperating portion of the plunger 5. The cooperating portion of the plunger 5 can be selected from at least one of:

- the edge of the plunger 5,
- the rim of the plunger 5,
- the head portion of the plunger 5.

The gasket 12 can be made of a material that is more ductile than the material of the cooperating portion of the plunger 5. The material of the gasket 12 at temperatures below 433 Kelvins is more ductile than the material of the aforementioned cooperating portion. The material of the gasket 12 is also more ductile than the material of the cooperating portion at temperatures above 213 Kelvins. In other words, the gasket 12 may be deformed while the valve 1 is in service.

In a special embodiment, the flow control adaptor 14a, 14b comprises aluminum (alloy) or gunmetal or brass. In yet another special embodiment, the flow control adaptor 14a, 14b comprises a polymeric material. The material of the flow control adaptor 14a, 14b can, by way of non-limiting example, also be selected from:

- austenite steel,
- ferrite steel,
- stainless steel.

The flow control adaptor 14a, 14b provides an aperture and/or an orifice to enable a flow of a fluid toward or from the first port 3. Likewise, the flow control adaptor 14a, 14b provides an aperture and/or an orifice to enable a flow of a fluid toward or from the second port 4. The aperture and/or the orifice of the adaptor 14a, 14b affords linear movement of the plunger 5 into and out of the aperture and/or the orifice. The aperture and/or the orifice of the adaptor 14a, 14b also affords axial movement of the plunger 5 into and out of the aperture and/or the orifice. That is, an inner diameter of the aperture and/or of the orifice of the adaptor 14a, 14b is larger than an outer diameter of the plunger 5. More specifically, the inner diameter of the aperture and/or of the orifice can be larger than the outer diameter of the edge of the plunger 5. The inner diameter of the aperture and/or of the orifice can also be larger than the outer diameter of the rim of the plunger 5. The inner diameter of the aperture and/or of the orifice can still be larger than the outer diameter of the head portion of the plunger 5.

In an embodiment, the plunger 5 can linearly move a distance between zero and ten millimetres in the direction of flow. More preferably, the plunger 5 can linearly move a distance between zero and five millimetres in the direction of flow. Yet more preferably, the plunger 5 can linearly move a distance between zero and three millimetres in the direction of flow. Small travel distances of the plunger 5 result in a valve 1 that requires modest resources in terms of actuation.

In a related embodiment, the plunger 5 can axially move a distance between zero and ten millimetres in the direction of flow. More preferably, the plunger 5 can axially move a distance between zero and five millimetres in the direction of flow. Yet more preferably, the plunger 5 can axially move a distance between zero and three millimetres in the direction of flow. Small travel distances of the plunger 5 result in a valve 1 that requires modest resources in terms of actuation.

The flow control adaptor 14a, 14b advantageously forms a part that is different from the frame 13 and is different from the gasket 12. The flow control adaptor 14a, 14b advantageously also forms a part that is different from the seat 15.

The flow control adaptor 14a, 14b can even be mechanically separable from the frame 13 and from the gasket 12. The flow control adaptor 14a, 14b can also be mechanically separable from the seat 15. These separations preferably take place non-destructively. That is, various flow control adaptors 14a, 14b can be used together with the same frame 13 and together with the same gasket 12. Various flow control adaptors 14a, 14b can also be used together with the same seat 15. More specifically, various flow control adaptors 14a, 14b can be mounted to and/or fitted to the same frame 13. For example, various flow control adaptors 14a, 14b can be screw-mounted and/or glued and/or shrink-fitted to the frame 13. Various flow control adaptors 14a, 14b can, by way of another non-limiting example, be interference-fitted to the frame 13. Various flow control adaptors 14a, 14b can, by way of still another non-limiting example, be caulked to the frame 13. When various flow control adaptors 14a, 14b can be mounted to the same frame 13, the valve 1 can be configured more easily. A plethora of flow rates through the valve can be accomplished by modifying and/or by changing the flow control adaptor 14a, 14b.

In the embodiment shown in FIG 1 and in FIG 2, the flow control adaptor 14a, 14b is a diffuser and has rotational symmetry. The flow control adaptor 14a, 14b as shown in FIG 1 comprises an inner portion and that inner portion has a bevelled surface. The surface of the inner portion preferably is bevelled and at the same time smooth. It is also envisaged that the cooperating portion of the plunger 5 has rotational symmetry. Ideally, the flow control adaptor 14a, 14b and the cooperating portion of the plunger 5 both have rotational symmetry. It is also envisaged that the rim of the cooperating portion of the plunger 5 has rotational symmetry. Ideally, the flow control adaptor 14a, 14b and the rim of the cooperating portion of the plunger 5 both have rotational symmetry. It is still envisaged that the edge of the cooperating portion of the plunger 5 has rotational symmetry. Ideally, the flow control adaptor 14a, 14b and the edge of the cooperating portion of the plunger 5 both have rotational symmetry. In an embodiment, the head portion of the plunger 5 has rotational symmetry. Ideally, the flow control adaptor 14a, 14b and the head portion of the plunger 5 both have rotational symmetry.

The flow control adaptor 14a, 14b and the cooperating portion of the plunger 5 can even exhibit rotational symmetry about (substantially) the same axis. The flow control adaptor 14a, 14b and the rim of the cooperating portion of the plunger 5 can still exhibit rotational symmetry about (substantially) the same axis. The flow control adaptor 14a, 14b and the edge of the cooperating portion of the plunger 5 can still exhibit rotational symmetry about (substantially) the same axis. In an embodiment, the flow control adaptor 14a, 14b and the head portion of the plunger 5 exhibit rotational symmetry about (substantially) the same axis. These axes are advantageously defined by the linear movement of the plunger 5. These axes can also be defined by the axial movement of the plunger 5.

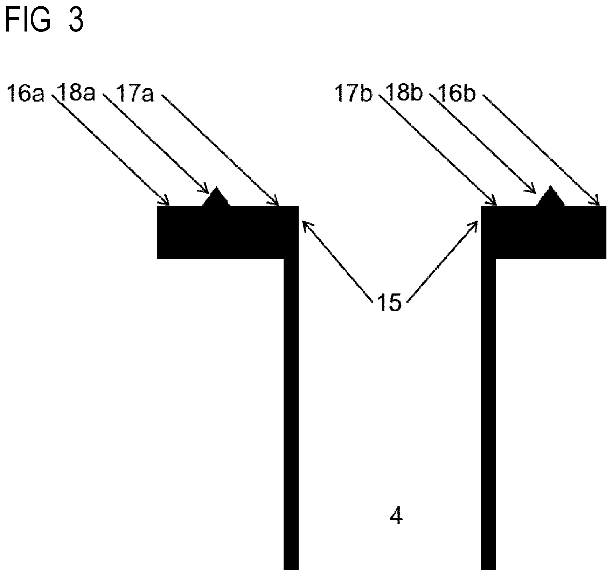

Now turning to FIG 3, a configuration of the seat 15 of the assembly 6 is shown in detail. The seat 15 comprises a seat surface pointing toward the gasket 12. The gasket 12 of the assembly 6 is shown in FIG 2.

The seat surface comprises a first flat portion 16a, 16b and/or a first smooth portion 16a, 16b. The first flat portion 16a, 16b and/or the first smooth portion 16a, 16b faces the first surface of the gasket 12. The first flat portion 16a, 16b and/or the first smooth portion 16a, 16b of the seat surface is advantageously parallel to the first surface of the gasket 12. The first flat portion 16a, 16b and/or the first smooth portion 16a, 16b can abut the first surface of the gasket 12.

In an embodiment, the first flat portion 16a, 16b of the surface of the seat 15 comprises an outer portion 16a, 16b of the surface of the seat 15. In a special embodiment, the first flat portion 16a, 16b of the surface of the seat 15 is an outer portion 16a, 16b of the surface of the seat 15. In an embodiment, the first smooth portion 16a, 16b of the surface of the seat 15 comprises an outer portion 16a, 16b of the surface of the seat 15. In a special embodiment, the first smooth portion 16a, 16b of the surface of the seat 15 is an outer portion 16a, 16b of the surface of the seat 15.

According to an aspect of the present disclosure, the first flat portion 16a, 16b of the surface of the seat 15 has rotational symmetry. Preferably, the first flat portion 16a, 16b and the flow control adaptor 14a, 14b and the head portion of the plunger 5 have rotational symmetry. The flow control adaptor 14a, 14b and the first flat portion 16a, 16b can exhibit rotational symmetry about substantially the same axis. The flow control adaptor 14a, 14b and the first flat portion 16a, 16b can even exhibit rotational symmetry about the same axis. The plunger 5 and the first flat portion 16a, 16b can exhibit rotational symmetry about substantially the same axis. The plunger 5 and the first flat portion 16a, 16b can even exhibit rotational symmetry about the same axis. These axes are advantageously defined by the linear movement of the plunger 5. These axes can also be defined by the axial movement of the plunger 5.

According to an aspect of the present disclosure, the first smooth portion 16a, 16b of the surface of the seat 15 has rotational symmetry. Preferably, the first smooth portion 16a, 16b and the flow control adaptor 14a, 14b and the head portion of the plunger 5 have rotational symmetry. The flow control adaptor 14a, 14b and the first smooth portion 16a, 16b can exhibit rotational symmetry about substantially the same axis. The flow control adaptor 14a, 14b and the first smooth portion 16a, 16b can even exhibit rotational symmetry about the same axis. The plunger 5 and the first smooth portion 16a, 16b can exhibit rotational symmetry about substantially the same axis. The plunger 5 and the first smooth portion 16a, 16b can even exhibit rotational symmetry about the same axis. These axes are advantageously defined by the linear movement of the plunger 5. These axes can also be defined by the axial movement of the plunger 5.

The seat surface also comprises a second flat portion 17a, 17b and/or a second smooth portion 17a, 17b. The first flat portion 16a, 16b is different from the second flat portion 17a, 17b. The first smooth portion 16a, 16b is different from the second smooth portion 17a, 17b. The second flat portion 17a, 17b and/or the second smooth portion 17a, 17b faces the first surface of the gasket 12. The second flat portion 17a, 17b and/or the second smooth portion 17a, 17b of the seat surface is advantageously parallel to the first surface of the gasket 12. The second flat portion 17a, 17b and/or the second smooth portion 17a, 17b can abut the first surface of the gasket 12.

In an embodiment, the second flat portion 17a, 17b of the surface of the seat 15 comprises an inner portion 17a, 17b of the surface of the seat 15. In a special embodiment, the second flat portion 17a, 17b of the surface of the seat 15 is an inner portion 17a, 17b of the surface of the seat 15. In an embodiment, the second smooth portion 17a, 17b of the surface of the seat 15 comprises an inner portion 17a, 17b of the surface of the seat 15. In a special embodiment, the second smooth portion 17a, 17b of the surface of the seat 15 is an inner portion 17a, 17b of the surface of the seat 15.

According to an aspect of the present disclosure, the second flat portion 17a, 17b of the surface of the seat 15 has rotational symmetry.

Preferably, the second flat portion 17a, 17b and the flow control adaptor 14a, 14b and the head portion of the plunger 5 have rotational symmetry. The flow control adaptor 14a, 14b and the second flat portion 17a, 17b can exhibit rotational symmetry about substantially the same axis. The flow control adaptor 14a, 14b and the second flat portion 17a, 17b can even exhibit rotational symmetry about the same axis. The plunger 5 and the second flat portion 17a, 17b can exhibit rotational symmetry about substantially the same axis. The plunger 5 and the second flat portion 17a, 17b can even exhibit rotational symmetry about the same axis. These axes are advantageously defined by the linear movement of the plunger 5. These axes can also be defined by the axial movement of the plunger 5.

The second flat portion 17a, 17b is closer to this symmetry axis than the first flat portion 16a, 17b. The second smooth portion 17a, 17b is closer to this symmetry axis than the first smooth portion 16a, 17b.

According to an aspect of the present disclosure, the second smooth portion 17a, 17b of the surface of the seat 15 has rotational symmetry. Preferably, the second smooth portion 17a, 17b and the flow control adaptor 14a, 14b and the head portion of the plunger 5 have rotational symmetry. The flow control adaptor 14a, 14b and the second smooth portion 17a, 17b can exhibit rotational symmetry about substantially the same axis. The flow control adaptor 14a, 14b and the second smooth portion 17a, 17b can even exhibit rotational symmetry about the same axis. The plunger 5 and the second smooth portion 17a, 17b can exhibit rotational symmetry about substantially the same axis. The plunger 5 and the second smooth portion 17a, 17b can even exhibit rotational symmetry about the same axis. Thes axes are advantageously defined by the linear movement of the plunger 5. Thes axes can also be defined by the axial movement of the plunger 5.

A first rim 18a, 18b such as a first, circular rim projects from the seat 15 and/or the surface of the seat 15. The seat surface is smooth except for the first rim 18a, 18b projecting from the seat surface, the seat surface and the first rim 18a, 18b being unitary. More specifically, the seat surface is smooth except for the first, circular rim 18a, 18b projecting from the seat surface, the seat surface and the first, circular rim being unitary. The seat surface can be flat except for the first, circular rim 18a, 18b projecting from the seat surface.

The first rim 18a, 18b is preferably arranged in between the first flat portion 16a, 16b and the second flat portion 17a, 17b. The first rim 18a, 18b can also be arranged in between the first smooth portion 16a, 16b and the second smooth portion 17a, 17b. More specifically, the first, circular rim 18a, 18b is arranged in between the first flat portion 16a, 16b and the second flat portion 17a, 17b. The first, circular rim 18a, 18b can also be arranged in between the first smooth portion 16a, 16b and the second smooth portion 17a, 17b.

According to an aspect of the present disclosure, the first rim 18a, 18b projecting from the surface of the seat 15 has rotational symmetry. Preferably, the first rim 18a, 18b and the flow control adaptor 14a, 14b and the head portion of the plunger 5 have rotational symmetry. The flow control adaptor 14a, 14b and the first rim 18a, 18b can exhibit rotational symmetry about substantially the same axis. The flow control adaptor 14a, 14b and the first rim 18a, 18b can even exhibit rotational symmetry about the same axis. The plunger 5 and the first rim 18a, 18b can exhibit rotational symmetry about substantially the same axis. The plunger 5 and the first rim 18a, 18b can even exhibit rotational symmetry about the same axis. These axes are advantageously defined by the linear movement of the plunger 5. These axes can also be defined by the axial movement of the plunger 5.

It is envisaged that the first rim 18a, 18b projects between 0.1 millimetres and 0.5 millimetres from the surface of the seat 15. That is, the first rim 18a, 18b has an end pointing toward the gasket 12. A minimum distance between the end of the first rim 18a, 18b and the surface of the seat 15 is between 0.1 millimetres and 0.5 millimetres. It is still envisaged that the first rim 18a, 18b projects 0.2 millimetres or 0.3 millimetres from the surface of the seat 15. That is, the first rim 18a, 18b has an end pointing toward the gasket 12. A minimum distance between the end of the first rim 18a, 18b and the surface of the seat 15 is 0.2 millimetres or 0.3 millimetres. As the first rim 18a, 18b projects further from the surface of the seat 15, the retention of the gasket 12 improves.

The minimum distance between the circular end of the first rim 18a, 18b and the surface of the seat 15 preferably remains substantially constant. That is, the minimum distance remains substantially constant along the entire circumference of the first rim 18a, 18b. The minimum distance between the circular end of the first rim 18a, 18b and the surface of the seat 15 ideally remains constant. That is, the minimum distance remains constant along the entire circumference of the first rim 18a, 18b. In a special embodiment, the minimum distance between the circular end of the first, circular rim 18a, 18b and the surface of the seat 15 preferably remains substantially constant. That is, the minimum distance remains substantially constant along the entire circumference of the first, circular rim 18a, 18b. The minimum distance between the circular end of the first, circular rim 18a, 18b and the surface of the seat 15 ideally remains constant. That is, the minimum distance remains constant along the entire circumference of the first, circular rim 18a, 18b.

In a related embodiment, an edge 18a, 18b such as a first, circular edge projects from the seat 15 and/or from the surface of the seat 15. The seat surface is smooth except for the first edge 18a, 18b projecting from the seat surface, the seat surface and the first edge 18a, 18b being unitary. More specifically, the seat surface is smooth except for the first, circular edge 18a, 18b projecting from the seat surface, the seat surface and the first, circular edge being unitary. The seat surface can be flat except for the first, circular edge 18a, 18b projecting from the seat surface.

The first edge 18a, 18b is preferably arranged in between the first flat portion 16a, 16b and the second flat portion 17a, 17b. The first edge 18a, 18b can also be arranged in between the first smooth portion 16a, 16b and the second smooth portion 17a, 17b. More specifically, the first, circular edge 18a, 18b is arranged in between the first flat portion 16a, 16b and the second flat portion 17a, 17b. The first, circular edge 18a, 18b can also be arranged in between the first smooth portion 16a, 16b and the second smooth portion 17a, 17b.

According to an aspect of the present disclosure, the first edge 18a, 18b projecting from the surface of the seat 15 has rotational symmetry.

Preferably, the first edge 18a, 18b and the flow control adaptor 14a, 14b and the head portion of the plunger 5 have rotational symmetry. The flow control adaptor 14a, 14b and the first edge 18a, 18b can exhibit rotational symmetry about substantially the same axis. The flow control adaptor 14a, 14b and the first edge 18a, 18b can even exhibit rotational symmetry about the same axis. The plunger 5 and the first edge 18a, 18b can exhibit rotational symmetry about substantially the same axis. The plunger 5 and the first edge 18a, 18b can even exhibit rotational symmetry about the same axis. These axes are advantageously defined by the linear movement of the plunger 5. These axes can also be defined by the axial movement of the plunger 5.

It is envisaged that the first edge 18a, 18b projects between 0.1 millimetres and 0.5 millimetres from the surface of the seat 15. That is, the first edge 18a, 18b has an end pointing toward the gasket 12. A minimum distance between the end of the first edge 18a, 18b and the surface of the seat 15 is between 0.1 millimetres and 0.5 millimetres. It is still envisaged that the first edge 18a, 18b projects 0.2 millimetres or 0.3 millimetres from the surface of the seat 15. That is, the first edge 18a, 18b has an end pointing toward the gasket 12. A minimum distance between the end of the first edge 18a, 18b and the surface of the seat 15 is 0.2 millimetres or 0.3 millimetres. As the first edge 18a, 18b projects further from the surface of the seat 15, the retention of the gasket 12 improves.

The minimum distance between the circular end of the first edge 18a, 18b and the surface of the seat 15 preferably remains substantially constant. That is, the minimum distance remains substantially constant along the entire circumference of the first edge 18a, 18b. The minimum distance between the circular end of the first edge 18a, 18b and the surface of the seat 15 ideally remains constant. That is, the minimum distance remains constant along the entire circumference of the first edge 18a, 18b. In a special embodiment, the minimum distance between the circular end of the first, circular edge 18a, 18b and the surface of the seat 15 preferably remains substantially constant. That is, the minimum distance remains substantially constant along the entire circumference of the first, circular edge 18a, 18b. The minimum distance between the circular end of the first, circular edge 18a, 18b and the surface of the seat 15 ideally remains constant. That is, the minimum distance remains constant along the entire circumference of the first, circular edge 18a, 18b.

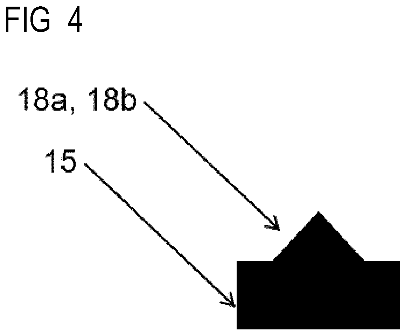

Now referring to FIG 4, details of the first rim 18a, 18b are illustrated. The first rim 18a, 18b as shown in FIG 4 projects from the seat 15 and/or from the surface of the seat 15. The first rim 18a, 18b has a circular end pointing toward the gasket 12 and the first rim 18a, 18b tapers toward its circular end.

The first rim 18a, 18b tapers toward its circular end at an obtuse angle. The obtuse angle can, by way of non-limiting example, exceed 105° or be 120° or be less than 135°. The obtuse angle can, by way of another non-limiting example, be substantially 120°. The obtuse angle can be between 119° and 121°. The obtuse angle affords a valve 1 and a valve seat assembly 6 with fluid-tightness across the entire operational range of temperatures.

The first rim 18a, 18b as shown in FIG 4 can be a first, circular rim 18a, 18b as explained above. The first, circular rim 18a, 18b projects from the seat 15 and from the surface of the seat 15. The first, circular rim 18a, 18b has a circular end pointing toward the gasket 12 and the first, circular rim 18a, 18b tapers toward its circular end.

The first, circular rim 18a, 18b tapers toward its circular end at an obtuse angle. The obtuse angle can, by way of non-limiting example, exceed 105° or be 120° or be less than 135°. The obtuse angle can, by way of another non-limiting example, be substantially 120°. The obtuse angle can be between 119° and 121°. The obtuse angle affords a valve 1 and a valve seat assembly 6 with fluid-tightness across the entire operational range of temperatures.

FIG 4 also depicts details of a first edge 18a, 18b. The first edge 18a, 18b as shown in FIG 4 projects from the seat 15 and/or from the surface of the seat 15. The first edge 18a, 18b has a circular end pointing toward the gasket 12 and the first edge 18a, 18b tapers toward its circular end.

The first edge 18a, 18b tapers toward its circular end at an obtuse angle. The obtuse angle can, by way of non-limiting example, exceed 105° or be 120° or be less than 135°. The obtuse angle can, by way of another non-limiting example, be substantially 120°. The obtuse angle can be between 119° and 121°. The obtuse angle affords a valve 1 and a valve seat assembly 6 with fluid-tightness across the entire operational range of temperatures.

The first edge 18a, 18b as shown in FIG 4 can be a first, circular edge 18a, 18b as explained above. The first, circular edge 18a, 18b as shown in FIG 4 projects from the seat 15 and from the surface of the seat 15. The first, circular edge 18a, 18b has a circular end pointing toward the gasket 12 and the first, circular edge 18a, 18b tapers toward its circular end.

The first, circular edge 18a, 18b tapers toward its circular end at an obtuse angle. The obtuse angle can, by way of non-limiting example, exceed 105° or be 120° or be less than 135°. The obtuse angle can, by way of another non-limiting example, be substantially 120°. The obtuse angle can be between 119° and 121°. The obtuse angle affords a valve 1 and a valve seat assembly 6 with fluid-tightness across the entire operational range of temperatures.

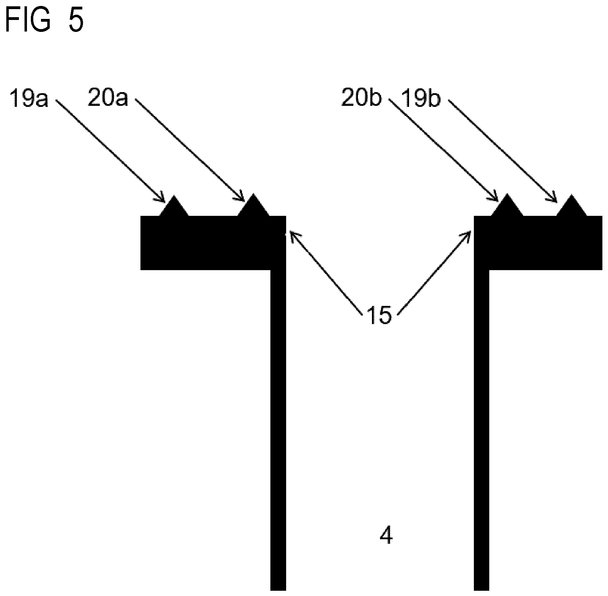

FIG 5 shows a valve seat assembly 6 having more than one rim. A second rim 19a, 19b projects from the seat 15 and from the surface of the seat 15. It is envisaged that the second rim 19a, 19b comprises an outer rim 19a, 19b. It is still envisaged that the second rim 19a, 19b is an outer rim 19a, 19b.

According to an aspect of the present disclosure, the outer rim 19a, 19b projecting from the surface of the seat 15 has rotational symmetry. Preferably, the outer rim 19a, 19b and the flow control adaptor 14a, 14b and the head portion of the plunger 5 have rotational symmetry. The flow control adaptor 14a, 14b and the outer rim 19a, 19b can exhibit rotational symmetry about substantially the same axis. The flow control adaptor 14a, 14b and the outer rim 19a, 19b can even exhibit rotational symmetry about the same axis. The plunger 5 and the outer rim 19a, 19b can exhibit rotational symmetry about substantially the same axis. The plunger 5 and the outer rim 19a, 19b can even exhibit rotational symmetry about the same axis. These axes are advantageously defined by the linear movement of the plunger 5. These axes can also be defined by the axial movement of the plunger 5.

It is envisaged that the outer rim 19a, 19b projects between 0.1 millimetres and 0.5 millimetres from the surface of the seat 15. That is, the outer rim 19a, 19b has an end pointing toward the gasket 12. A minimum distance between the end of the outer rim 19a, 19b and the surface of the seat 15 is between 0.1 millimetres and 0.5 millimetres. It is still envisaged that the outer rim 19a, 19b projects 0.2 millimetres or 0.3 millimetres from the surface of the seat 15. That is, the outer rim 19a, 19b has an end pointing toward the gasket 12. A minimum distance between the end of the outer rim 19a, 19b and the surface of the seat 15 is 0.2 millimetres or 0.3 millimetres. As the outer rim 19a, 19b projects further from the surface of the seat 15, the retention of the gasket 12 improves.

The minimum distance between the circular end of the outer rim 19a, 19b and the surface of the seat 15 preferably remains substantially constant. That is, the minimum distance remains substantially constant along the entire circumference of the outer rim 19a, 19b. The minimum distance between the circular end of the outer rim 19a, 19b and the surface of the seat 15 ideally remains constant. That is, the minimum distance remains constant along the entire circumference of the outer rim 19a, 19b.

The notes on the obtuse angle of the first rim 18a, 18b as shown in FIG 4 apply to the outer rim 19a, 19b as shown in FIG 5.

According to another aspect of the present disclosure, the outer rim 19a, 19b can comprise an outer, circular rim 19a, 19b. More specifically, the outer rim 19a, 19b can be an outer, circular rim 19a, 19b.

The outer, circular rim 19a, 19b projects from the seat 15 and/or projects from the surface of the seat 15 and has rotational symmetry. Preferably, the outer, circular rim 19a, 19b and the flow control adaptor 14a, 14b and the head portion of the plunger 5 have rotational symmetry. The flow control adaptor 14a, 14b and the outer, circular rim 19a, 19b can exhibit rotational symmetry about substantially the same axis. The flow control adaptor 14a, 14b and the outer, circular rim 19a, 19b can even exhibit rotational symmetry about the same axis. The plunger 5 and the outer, circular rim 19a, 19b can exhibit rotational symmetry about substantially the same axis. The plunger 5 and the outer, circular rim 19a, 19b can even exhibit rotational symmetry about the same axis. These axes are advantageously defined by the linear movement of the plunger 5. These axes can also be defined by the axial movement of the plunger 5.

It is envisaged that the outer, circular rim 19a, 19b projects between 0.1 millimetres and 0.5 millimetres from the surface of the seat 15. That is, the outer, circular rim 19a, 19b has an end pointing toward the gasket 12. A minimum distance between the end of the outer, circular rim 19a, 19b and the surface of the seat 15 is between 0.1 millimetres and 0.5 millimetres. It is still envisaged that the outer, circular rim 19a, 19b projects 0.2 millimetres or 0.3 millimetres from the surface of the seat 15. That is, the outer, circular rim 19a, 19b has an end pointing toward the gasket 12. A minimum distance between the end of the outer, circular rim 19a, 19b and the surface of the seat 15 is 0.2 millimetres or 0.3 millimetres. As the outer, circular rim 19a, 19b projects further from the surface of the seat 15, the retention of the gasket 12 improves.

The minimum distance between the circular end of the outer, circular rim 19a, 19b and the surface of the seat 15 preferably remains substantially constant. That is, the minimum distance remains substantially constant along the entire circumference of the outer, circular rim 19a, 19b. The minimum distance between the circular end of the outer, circular rim 19a, 19b and the surface of the seat 15 ideally remains constant. That is, the minimum distance remains constant along the entire circumference of the outer, circular rim 19a, 19b.

The notes on the obtuse angle of the first rim 18a, 18b as shown in FIG 4 apply to the outer, circular rim 19a, 19b as shown in FIG 5.

According to still another aspect of the present disclosure, FIG 5 shows a valve seat assembly 6 having more than one edge. A second edge 19a, 19b projects from the seat 15 and from the surface of the seat 15. It is envisaged that the second edge 19a, 19b comprises an outer edge 19a, 19b. It is still envisaged that the second edge 19a, 19b is an outer edge 19a, 19b.

The second edge 19a, 19b projects from the seat 15 and projects from the surface of the seat 15 and has rotational symmetry. Preferably, the outer edge 19a, 19b and the flow control adaptor 14a, 14b and the head portion of the plunger 5 have rotational symmetry. The flow control adaptor 14a, 14b and the outer edge 19a, 19b can exhibit rotational symmetry about substantially the same axis. The flow control adaptor 14a, 14b and the outer edge 19a, 19b can even exhibit rotational symmetry about the same axis. The plunger 5 and the outer edge 19a, 19b can exhibit rotational symmetry about substantially the same axis. The plunger 5 and the outer edge 19a, 19b can even exhibit rotational symmetry about the same axis. These axes are advantageously defined by the linear movement of the plunger 5. These axes can also be defined by the axial movement of the plunger 5.

It is envisaged that the outer edge 19a, 19b projects between 0.1 millimetres and 0.5 millimetres from the surface of the seat 15. That is, the outer edge 19a, 19b has an end pointing toward the gasket 12. A minimum distance between the end of the outer edge 19a, 19b and the surface of the seat 15 is between 0.1 millimetres and 0.5 millimetres. It is still envisaged that the outer edge 19a, 19b projects 0.2 millimetres or 0.3 millimetres from the surface of the seat 15. That is, the outer edge 19a, 19b has an end pointing toward the gasket 12. A minimum distance between the end of the outer edge 19a, 19b and the surface of the seat 15 is 0.2 millimetres or 0.3 millimetres. As the outer edge 19a, 19b projects further from the surface of the seat 15, the retention of the gasket 12 improves.

The minimum distance between the circular end of the outer edge 19a, 19b and the surface of the seat 15 preferably remains substantially constant. That is, the minimum distance remains substantially constant along the entire circumference of the outer edge 19a, 19b. The minimum distance between the circular end of the outer edge 19a, 19b and the surface of the seat 15 ideally remains constant. That is, the minimum distance remains constant along the entire circumference of the outer edge 19a, 19b.

The notes on the obtuse angle of the first edge 18a, 18b as shown in FIG 4 apply to the outer edge 19a, 19b as shown in FIG 5.

According to yet another aspect of the present disclosure, the outer edge 19a, 19b can comprise an outer, circular edge 19a, 19b. More specifically, the outer edge 19a, 19b can be an outer, circular edge 19a, 19b.

The outer, circular edge 19a, 19b projects from the seat 15 and/or projects from the surface of the seat 15 and has rotational symmetry. Preferably, the outer, circular edge 19a, 19b and the flow control adaptor 14a, 14b and the head portion of the plunger 5 have rotational symmetry. The flow control adaptor 14a, 14b and the outer, circular edge 19a, 19b can exhibit rotational symmetry about substantially the same axis. The flow control adaptor 14a, 14b and the outer, circular edge 19a, 19b can even exhibit rotational symmetry about the same axis. The plunger 5 and the outer, circular edge 19a, 19b can exhibit rotational symmetry about substantially the same axis. The plunger 5 and the outer, circular edge 19a, 19b can even exhibit rotational symmetry about the same axis. These axes are advantageously defined by the linear movement of the plunger 5. These axes can also be defined by the axial movement of the plunger 5.

It is envisaged that the outer, circular edge 19a, 19b projects between 0.1 millimetres and 0.5 millimetres from the surface of the seat 15. That is, the outer, circular edge 19a, 19b has an end pointing toward the gasket 12. A minimum distance between the end of the outer, circular edge 19a, 19b and the surface of the seat 15 is between 0.1 millimetres and 0.5 millimetres. It is still envisaged that the outer, circular edge 19a, 19b projects 0.2 millimetres or 0.3 millimetres from the surface of the seat 15. That is, the outer, circular edge 19a, 19b has an end pointing toward the gasket 12. A minimum distance between the end of the outer, circular edge 19a, 19b and the surface of the seat 15 is 0.2 millimetres or 0.3 millimetres. As the outer, circular edge 19a, 19b projects further from the surface of the seat 15, the retention of the gasket 12 improves.

The minimum distance between the circular end of the outer, circular edge 19a, 19b and the surface of the seat 15 preferably remains substantially constant. That is, the minimum distance remains substantially constant along the entire circumference of the outer, circular edge 19a, 19b. The minimum distance between the circular end of the outer, circular edge 19a, 19b and the surface of the seat 15 ideally remains constant. That is, the minimum distance remains constant along the entire circumference of the outer, circular edge 19a, 19b.

The notes on the obtuse angle of the first edge 18a, 18b as shown in FIG 4 apply to the outer, circular edge 19a, 19b as shown in FIG 5.

FIG 5 shows a valve seat assembly 6 having more than one rim. A third rim 20a, 20b projects from the seat 15 and from the surface of the seat 15. It is envisaged that the third rim 20a, 20b comprises an inner rim 20a, 20b. It is still envisaged that the third rim 20a, 20b is an inner rim 20a, 20b. The third rim 20a, 20b is different from the second rim 19a, 19b.

The third rim 20a, 20b is closer to the symmetry axis defined by the linear movement of the plunger 5 than the second rim 19a, 19b. The third rim 20a, 20b is also closer to the symmetry axis defined by the axial movement of the plunger 5 than the second rim 19a, 19b.

According to an aspect of the present disclosure, the inner rim 20a, 20b projecting from the surface of the seat 15 has rotational symmetry. Preferably, the inner rim 20a, 20b and the flow control adaptor 14a, 14b and the head portion of the plunger 5 have rotational symmetry. Ideally, the outer rim 19a, 19b, the inner rim 20a, 20b, and the head portion of the plunger 5 have rotational symmetry. The flow control adaptor 14a, 14b and the inner rim 20a, 20b can exhibit rotational symmetry about substantially the same axis. The flow control adaptor 14a, 14b and the inner rim 20a, 20b can even exhibit rotational symmetry about the same axis. The plunger 5 and the inner rim 20a, 20b can exhibit rotational symmetry about substantially the same axis. The plunger 5 and the inner rim 20a, 20b can even exhibit rotational symmetry about the same axis. The outer rim 19a, 19b and the inner rim 20a, 20b can exhibit rotational symmetry about substantially the same axis. The outer rim 19a, 19b and the inner rim 20a, 20b can even exhibit rotational symmetry about the same axis. These axes are advantageously defined by the linear movement of the plunger 5. These axes can also be defined by the axial movement of the plunger 5.

It is envisaged that the inner rim 20a, 20b projects between 0.1 millimetres and 0.5 millimetres from the surface of the seat 15. That is, the inner rim 20a, 20b has an end pointing toward the gasket 12. A minimum distance between the end of the inner rim 20a, 20b and the surface of the seat 15 is between 0.1 millimetres and 0.5 millimetres. It is still envisaged that the inner rim 20a, 20b projects 0.2 millimetres or 0.3 millimetres from the surface of the seat 15. That is, the inner rim 20a, 20b has an end pointing toward the gasket 12. A minimum distance between the end of the inner rim 20a, 20b and the surface of the seat 15 is 0.2 millimetres or 0.3 millimetres. As the inner rim 20a, 20b projects further from the surface of the seat 15, the retention of the gasket 12 improves.

The minimum distance between the circular end of the inner rim 20a, 20b and the surface of the seat 15 preferably remains substantially constant. That is, the minimum distance remains substantially constant along the entire circumference of the inner rim 20a, 20b. The minimum distance between the circular end of the inner rim 20a, 20b and the surface of the seat 15 ideally remains constant. That is, the minimum distance remains constant along the entire circumference of the inner rim 20a, 20b.

Advantageously, the outer rim 19a, 19b and the inner rim 20a, 20b project from the surface of the seat 15 by substantially the same distance. Ideally, the outer rim 19a, 19b and the inner rim 20a, 20b project from the surface of the seat 15 by the same distance. The complexity of the valve seat assembly 6 is thereby reduced and manufacture of the valve seat assembly 6 is facilitated.

The notes on the obtuse angle of the first rim 18a, 18b as shown in FIG 4 apply to the inner rim 20a, 20b as shown in FIG 5. Advantageously, the outer rim 19a, 19b and the inner rim 20a, 20b each taper at substantially the same obtuse angle. Ideally, the outer rim 19a, 19b and the inner rim 20a, 20b each taper at the same obtuse angle. The complexity of the valve seat assembly 6 is thereby reduced and manufacture of the valve seat assembly 6 is facilitated.

According to another aspect of the present disclosure, the inner rim 20a, 20b can comprise an inner, circular rim 20a, 20b. More specifically, the inner rim 20a, 20b can be an inner, circular rim 20a, 20b. The inner, circular rim 20a, 20b is different from the outer, circular rim 19a, 19b.

The inner, circular rim 20a, 20b projects from the seat 15 and/or projects from the surface of the seat 15 and has rotational symmetry. Preferably, the inner, circular rim 20a, 20b and the flow control adaptor 14a, 14b and the head portion of the plunger 5 have rotational symmetry. Ideally, the outer, circular rim 19a, 19b, the inner, circular rim 20a, 20b, and the head portion of the plunger 5 have rotational symmetry. The flow control adaptor 14a, 14b and the inner, circular rim 20a, 20b can exhibit rotational symmetry about substantially the same axis. The flow control adaptor 14a, 14b and the inner, circular rim 20a, 20b can even exhibit rotational symmetry about the same axis. The plunger 5 and the inner, circular rim 20a, 20b can exhibit rotational symmetry about substantially the same axis. The plunger 5 and the inner, circular rim 20a, 20b can even exhibit rotational symmetry about the same axis. The outer, circular rim 19a, 19b and the inner, circular rim 20a, 20b can exhibit rotational symmetry about substantially the same axis. The outer, circular rim 19a, 19b and the inner, circular rim 20a, 20b can even exhibit rotational symmetry about the same axis. These axes are advantageously defined by the linear movement of the plunger 5. These axes can also be defined by the axial movement of the plunger 5.

It is envisaged that the inner, circular rim 20a, 20b projects between 0.1 millimetres and 0.5 millimetres from the surface of the seat 15. That is, the inner, circular rim 20a, 20b has an end pointing toward the gasket 12. A minimum distance between the end of the inner, circular rim 20a, 20b and the surface of the seat 15 is between 0.1 millimetres and 0.5 millimetres. It is still envisaged that the inner, circular rim 20a, 20b projects 0.2 millimetres or 0.3 millimetres from the surface of the seat 15. That is, the inner, circular rim 20a, 20b has an end pointing toward the gasket 12. A minimum distance between the end of the inner, circular rim 20a, 20b and the surface of the seat 15 is 0.2 millimetres or 0.3 millimetres. As the inner, circular rim 20a, 20b projects further from the surface of the seat 15, the retention of the gasket 12 improves.

The minimum distance between the circular end of the inner, circular rim 20a, 20b and the surface of the seat 15 preferably remains substantially constant. That is, the minimum distance remains substantially constant along the entire circumference of the inner, circular rim 20a, 20b. The minimum distance between the circular end of the inner, circular rim 20a, 20b and the surface of the seat 15 ideally remains constant. That is, the minimum distance remains constant along the entire circumference of the inner, circular rim 20a, 20b.

Advantageously, the outer, circular rim 19a, 19b and the inner, circular rim 20a, 20b project from the surface of the seat 15 by substantially the same distance. Ideally, the outer, circular rim 19a, 19b and the inner, circular rim 20a, 20b project from the surface of the seat 15 by the same distance. The complexity of the valve seat assembly 6 is thereby reduced and manufacture of the valve seat assembly 6 is facilitated.

The notes on the obtuse angle of the first rim 18a, 18b as shown in FIG 4 apply to the inner, circular rim 20a, 20b as shown in FIG 5. Advantageously, the outer, circular rim 19a, 19b and the inner, circular rim 20a, 20b each taper at substantially the same obtuse angle. Ideally, the outer, circular rim 19a, 19b and the inner, circular rim 20a, 20b each taper at the same obtuse angle. The complexity of the valve seat assembly 6 is thereby reduced and manufacture of the valve seat assembly 6 is facilitated.

According to still another aspect of the present disclosure, FIG 5 shows a valve seat assembly 6 having more than one edge. A third edge 20a, 20b projects from the seat 15 and from the surface of the seat 15. It is envisaged that the third edge 20a, 20b comprises an inner edge 20a, 20b. It is still envisaged that the third edge 20a, 20b is an inner edge 20a, 20b. The third edge 20a, 20b is different from the second edge 19a, 19b.

The third edge 20a, 20b is closer to the symmetry axis defined by the linear movement of the plunger 5 than the second edge 19a, 19b. The third edge 20a, 20b is also closer to the symmetry axis defined by the axial movement of the plunger 5 than the second edge 19a, 19b.

The third edge 20a, 20b projects from the seat 15 and/or projects from the surface of the seat 15 and has rotational symmetry. Preferably, the inner edge 20a, 20b and the flow control adaptor 14a, 14b and the head portion of the plunger 5 have rotational symmetry. Ideally, the outer edge 19a, 19b, the inner edge 20a, 20b, and the head portion of the plunger 5 have rotational symmetry. The flow control adaptor 14a, 14b and the inner edge 20a, 20b can exhibit rotational symmetry about substantially the same axis. The flow control adaptor 14a, 14b and the inner edge 20a, 20b can even exhibit rotational symmetry about the same axis. The plunger 5 and the inner edge 20a, 20b can exhibit rotational symmetry about substantially the same axis. The plunger 5 and the inner edge 20a, 20b can even exhibit rotational symmetry about the same axis. The outer edge 19a, 19b and the inner edge 20a, 20b can exhibit rotational symmetry about substantially the same axis. The outer edge 19a, 19b and the inner edge 20a, 20b can even exhibit rotational symmetry about the same axis. These axes are advantageously defined by the linear movement of the plunger 5. These axes can also be defined by the axial movement of the plunger 5.

It is envisaged that the inner edge 20a, 20b projects between 0.1 millimetres and 0.5 millimetres from the surface of the seat 15. That is, the inner edge 20a, 20b has an end pointing toward the gasket 12. A minimum distance between the end of the inner edge 20a, 20b and the surface of the seat 15 is between 0.1 millimetres and 0.5 millimetres. It is still envisaged that the inner edge 20a, 20b projects 0.2 millimetres or 0.3 millimetres from the surface of the seat 15. That is, the inner edge 20a, 20b has an end pointing toward the gasket 12. A minimum distance between the end of the inner edge 20a, 20b and the surface of the seat 15 is 0.2 millimetres or 0.3 millimetres. As the inner edge 20a, 20b projects further from the surface of the seat 15, the retention of the gasket 12 improves.

The minimum distance between the circular end of the inner edge 20a, 20b and the surface of the seat 15 preferably remains substantially constant. That is, the minimum distance remains substantially constant along the entire circumference of the inner edge 20a, 20b. The minimum distance between the circular end of the inner edge 20a, 20b and the surface of the seat 15 ideally remains constant. That is, the minimum distance remains constant along the entire circumference of the inner edge 20a, 20b.

Advantageously, the outer edge 19a, 19b and the inner edge 20a, 20b project from the surface of the seat 15 by substantially the same distance. Ideally, the outer edge 19a, 19b and the inner edge 20a, 20b project from the surface of the seat 15 by the same distance. The complexity of the valve seat assembly 6 is thereby reduced and manufacture of the valve seat assembly 6 is facilitated.

The notes on the obtuse angle of the first edge 18a, 18b as shown in FIG 4 apply to the inner edge 20a, 20b as shown in FIG 5. Advantageously, the outer edge 19a, 19b and the inner edge 20a, 20b each taper at substantially the same obtuse angle. Ideally, the outer edge 19a, 19b and the inner edge 20a, 20b each taper at the same obtuse angle. The complexity of the valve seat assembly 6 is thereby reduced and manufacture of the valve seat assembly 6 is facilitated.

According to yet another aspect of the present disclosure, the inner edge 20a, 20b can comprise an inner, circular edge 20a, 20b. More specifically, the inner edge 20a, 20b can be an inner, circular edge 20a, 20b. The inner, circular edge 20a, 20b is different from the outer, circular edge 19a, 19b.

The inner, circular edge 20a, 20b projects from the seat 15 and/or projects from the surface of the seat 15 and has rotational symmetry. Preferably, the inner, circular edge 20a, 20b and the flow control adaptor 14a, 14b and the head portion of the plunger 5 have rotational symmetry. Ideally, the outer, circular edge 19a, 19b, the inner, circular edge 20a, 20b, and the head portion of the plunger 5 have rotational symmetry. The flow control adaptor 14a, 14b and the inner, circular edge 20a, 20b can exhibit rotational symmetry about substantially the same axis. The flow control adaptor 14a, 14b and the inner, circular edge 20a, 20b can even exhibit rotational symmetry about the same axis. The plunger 5 and the inner, circular edge 20a, 20b can exhibit rotational symmetry about substantially the same axis. The plunger 5 and the inner, circular edge 20a, 20b can even exhibit rotational symmetry about the same axis. The outer, circular edge 19a, 19b and the inner, circular edge 20a, 20b can exhibit rotational symmetry about substantially the same axis. The outer, circular edge 19a, 19b and the inner, circular edge 20a, 20b can even exhibit rotational symmetry about the same axis. These axes are advantageously defined by the linear movement of the plunger 5. These axes can also be defined by the axial movement of the plunger 5.

It is envisaged that the inner, circular edge 20a, 20b projects between 0.1 millimetres and 0.5 millimetres from the surface of the seat 15. That is, the inner, circular edge 20a, 20b has an end pointing toward the gasket 12. A minimum distance between the end of the inner, circular edge 20a, 20b and the surface of the seat 15 is between 0.1 millimetres and 0.5 millimetres. It is still envisaged that the inner, circular edge 20a, 20b projects 0.2 millimetres or 0.3 millimetres from the surface of the seat 15. That is, the inner, circular edge 20a, 20b has an end pointing toward the gasket 12. A minimum distance between the end of the inner, circular edge 20a, 20b and the surface of the seat 15 is 0.2 millimetres or 0.3 millimetres. As the inner, circular edge 20a, 20b projects further from the surface of the seat 15, the retention of the gasket 12 improves.

The minimum distance between the circular end of the inner, circular edge 20a, 20b and the surface of the seat 15 preferably remains substantially constant. That is, the minimum distance remains substantially constant along the entire circumference of the inner, circular edge 20a, 20b. The minimum distance between the circular end of the inner, circular edge 20a, 20b and the surface of the seat 15 ideally remains constant. That is, the minimum distance remains constant along the entire circumference of the inner, circular edge 20a, 20b.

Advantageously, the outer, circular edge 19a, 19b and the inner, circular edge 20a, 20b project from the surface of the seat 15 by substantially the same distance. Ideally, the outer, circular edge 19a, 19b and the inner, circular edge 20a, 20b project from the surface of the seat 15 by the same distance. The complexity of the valve seat assembly 6 is thereby reduced and manufacture of the valve seat assembly 6 is facilitated.

The notes on the obtuse angle of the first edge 18a, 18b as shown in FIG 4 apply to the inner, circular edge 20a, 20b as shown in FIG 5. Advantageously, the outer, circular edge 19a, 19b and the inner, circular edge 20a, 20b each taper at substantially the same obtuse angle. Ideally, the outer, circular edge 19a, 19b and the inner, circular edge 20a, 20b each taper at the same obtuse angle. The complexity of the valve seat assembly 6 is thereby reduced and manufacture of the valve seat assembly 6 is facilitated.

As described in detail herein, the present disclosure deals with a valve (1) comprising:

an adaptor (14a - 14e), a first port (3), a second port (4), and a fluid path extending between the first port (3) and the second port (4);
a plunger (5) situated in the fluid path between the first port (3) and the second port (4), the plunger (5) being selectively and linearly movable between a closed position which closes the fluid path between the first port (3) and the second port (4) and an open position which opens the fluid path between the first port (3) and the second port (4);
a valve seat assembly (6) situated in the fluid path between the first port (3) and the second port (4), the valve seat assembly (6) comprising:

a gasket (12) and a frame (13), the frame (13) having a seat (15);

wherein the gasket (12) is different from the adaptor (14a - 14e) and is different from the seat (15) and is interposed between the adaptor (14a - 14e) and the seat (15);

wherein the adaptor (14a - 14e) has a first aperture, the first aperture having a first diameter and wherein the gasket (12) has a second aperture, the second aperture having a second diameter;

wherein the first diameter is larger than the second diameter;

wherein in the open position the plunger (5) is detached from the gasket (12) to enable a flow of a fluid through the second aperture and along the fluid path;

wherein in the closed position the plunger (5) abuts the gasket (12) to prevent the flow of the fluid through the second aperture and along the fluid path;

wherein the seat (15) comprises a seat surface; and

wherein at least one first protrusion (18a, 18b; 19a, 19b; 20a, 20b) projects from the seat surface and imbeds itself into the gasket (12).

It is envisaged that the plunger (5) is situated in the fluid path between the first port (3) and the second port (4), the plunger (5) being selectively and axially movable between the closed position which closes the fluid path between the first port (3) and the second port (4) and the open position which opens the fluid path between the first port (3) and the second port (4).

According to an aspect of the present disclosure, the adaptor (14a - 14e) comprises a flow control adaptor (14a - 14e). According to a special aspect of the present disclosure, the adaptor (14a - 14e) is a flow control adaptor (14a - 14e).

In an embodiment, the valve seat assembly (6) comprises the adaptor (14a - 14e). In an alternate embodiment, the plunger (5) comprises the adaptor (14a - 14e).

It is envisaged that the gasket (12) is separate from the adaptor (14a - 14e). It is also envisaged that the gasket (12) is separable from the adaptor (14a - 14e). The separation preferably takes place non-destructively. That is, the mechanical structure of the valve is preserved.

The first aperture advantageously comprises a first bore. The first aperture ideally is a first bore. The second aperture advantageously comprises a second bore. The second aperture ideally is a second bore.

In an embodiment, the first diameter is bigger than the second diameter. In a related embodiment, the first diameter is wider than the second diameter. The first diameter can, by way of non-limiting example, be at least 0.5 millimetres wider than the second diameter. The first diameter can, by way of another non-limiting example, be at least one millimetre wider than the second diameter.

These widths are advantageously widths in a lateral direction. A lateral direction is defined by the (movement of the) plunger (5), the lateral direction being perpendicular to the (linear and/or axial movement of the) plunger (5).

It is stressed that the foregoing relates only to certain embodiments of the disclosure. Numerous changes can be made therein without departing from the scope of the disclosure as defined by the following claims. It should also be understood that the disclosure is not restricted to the illustrated embodiments. Various modifications can be made within the scope of the following claims.

Reference numerals

    1 valve
    2 housing
    3 port
    4 port
    5 plunger
    6 valve seat assembly
    7 armature
    8 stem
    9a, 9b solenoid
    10 chamber
    11 resilient member
    12 gasket
    13 frame
    14a - 14e adaptors such as flow control adaptors
    15 seat
    16a, 16b surface such as seat surface
    17a, 17b surface such as seat surface
    18a, 18b protrusion, edge, rim
    19a, 19b protrusion, edge, rim
    20a, 20b protrusion, edge, rim

**Claims**

1. A valve (1) comprising:

    an adaptor (14a - 14e), a first port (3), a second port (4), and a fluid path extending between the first port (3) and the second port (4);
    a plunger (5) situated in the fluid path between the first port (3) and the second port (4), the plunger (5) being selectively and linearly movable between a closed position which closes the fluid path between the first port (3) and the second port (4) and an open position which opens the fluid path between the first port (3) and the second port (4);
    a valve seat assembly (6) situated in the fluid path between the first port (3) and the second port (4), the valve seat assembly (6) comprising:

a gasket (12) and a frame (13), the frame (13) having a seat (15); wherein the gasket (12) is different from the adaptor (14a - 14e) and is different from the seat (15); wherein the adaptor (14a - 14e) has a first aperture, the first aperture having a first diameter and wherein the gasket (12) has a second aperture, the second aperture having a second diameter; wherein the first diameter is larger than the second diameter; wherein in the open position the plunger (5) is detached from the gasket (12) to enable a flow of a fluid through the second aperture and along the fluid path; wherein in the closed position the plunger (5) abuts the gasket (12) to prevent the flow of the fluid through the second aperture and along the fluid path; wherein the seat (15) comprises a seat surface; **characterised in that** at least one first protrusion (18a, 18b; 19a, 19b; 20a, 20b) projects from the seat surface and imbeds itself into the gasket (12); and the gasket (12) is interposed between the adaptor (14a - 14e) and the seat (15).

2. The valve (1) according to claim 1, wherein the at least one first protrusion (18a, 18b; 19a, 19b; 20a, 20b) comprises at least one of:

- a first edge (18a, 18b; 19a, 19b; 20a, 20b),
- a first, annular edge (18a, 18b; 19a, 19b; 20a, 20b),
- a first, circular edge (18a, 18b; 19a, 19b; 20a, 20b),
- a first rim (18a, 18b; 19a, 19b; 20a, 20b),
- a first, annular rim (18a, 18b; 19a, 19b; 20a, 20b),
- a first, circular rim (18a, 18b; 19a, 19b; 20a, 20b).

3. The valve (1) according to any of the claims 1 to 2, wherein the at least one first protrusion (18a, 18b; 19a, 19b; 20a, 20b) projects at least 0.2 millimetres from the surface of the seat (15).

4. The valve (1) according to any of the claims 1 to 3, wherein the at least one first protrusion (18a, 18b; 19a, 19b; 20a, 20b) is formed in the surface of the seat (15).

5. The valve (1) according to any of the claims 1 to 4, wherein the at least one first protrusion (18a, 18b; 19a, 19b; 20a, 20b) comprises an end pointing toward the gasket (12);

wherein the at least one first protrusion (18a, 18b; 19a, 19b; 20a, 20b) tapers toward its end at an obtuse angle; and wherein the obtuse angle is between 105° and 150°.

6. The valve (1) according to any of the claims 1 to 5, wherein the surface of the seat (15) comprises a first portion (16a, 16b; 17a, 17b) and wherein the surface of the gasket (12) comprises a first portion;

wherein the first portion (16a, 16b; 17a, 17b) of the surface of the seat (15) and the first portion of the surface of the gasket (12) are each substantially perpendicular to an axis defined by a linear movement of the plunger (5); and wherein the first portion (16a, 16b; 17a, 17b) of the surface of the seat (15) abuts the first portion of the surface of the gasket (12).

7. The valve (1) according to claim 6, wherein the first portion (16a, 16b; 17a, 17b) of the surface of the seat (15) is flat; and wherein the first portion of the surface of the gasket (12) is flat.

8. The valve (1) according to any of the claims 6 to 7, wherein the first portion (16a, 16b; 17a, 17b) of the surface of the seat (15) is substantially parallel to the first portion of the surface of the gasket (12).

9. The valve (1) according to any of the claims 1 to 8, wherein the surface of the seat (15) comprises a second portion (17a, 17b; 16a, 16b) and wherein the surface of the gasket (12) comprises a second portion;

wherein the second portion (17a, 17b; 16a, 16b) of the surface of the seat (15) is different from the first portion (16a, 16b; 17a, 17b) of the surface of the seat (15); wherein the second portion of the surface of the gasket (12) is different from the first portion of the surface of the gasket (12); wherein the second portion (17a, 17b; 16a, 16b) of the surface of the seat (15) and the second portion of the surface of the gasket (12) are each substantially perpendicular to an or to the axis defined by a or by the linear movement of the plunger (5); and wherein the second portion (17a, 17b; 16a, 16b) of the surface of the seat (15) abuts the second portion of the surface of the gasket (12).

10. The valve (1) according to claim 9, wherein the second portion (17a, 17b; 16a, 16b) of the surface of the seat (15) is flat; and
wherein the second portion of the surface of the gasket (12) is flat.

11. The valve (1) according to any of the claims 9 to 10, wherein the second portion (17a, 17b; 16a, 16b) of the surface of the seat (15) is substantially parallel to the second portion of the surface of the gasket (12).

12. The valve (1) according to the claims 6 and 9, wherein the at least one first protrusion (18a, 18b; 19a, 19b; 20a, 20b) is interposed between the first portion (16a, 16b; 17a, 17b) of the surface of the seat (15) and the second portion (17a, 17b; 16a, 16b) of the surface of the seat (15).

13. The valve (1) according to the claims 6 and 9, wherein

   - the at least one first protrusion (18a, 18b; 19a, 19b; 20a, 20b) and
   - the first portion (16a, 16b; 17a, 17b) of the surface of the seat (15) and
   - the second portion (17a, 17b; 16a, 16b) of the surface of the seat (15)

   have rotational symmetry about the axis defined by the linear movement of the plunger (5).

14. The valve (1) according to the claims 6 and 9, wherein

   - the first portion (16a, 16b; 17a, 17b) of the surface of the seat (15) and
   - the first portion of the surface of the gasket (12) and
   - the second portion (17a, 17b; 16a, 16b) of the surface of the seat (15) and
   - the second portion of the surface of the gasket (12) are substantially parallel to one another.

15. The valve (1) according to any of the claims 1 to 14, wherein at least one second protrusion (19a, 19b; 20a, 20b) projects from the seat surface and imbeds itself into the gasket (12); and wherein the at least one second protrusion (19a, 19b; 20a, 20b) is different from the at least one first protrusion (18a, 18b; 19a, 19b; 20a, 20b).

**Patentansprüche**

1. Ventil (1) umfassend:

   einen Adapter (14a-14e), einen ersten Anschluss (3), einen zweiten Anschluss (4) und einen Fluidweg, der sich zwischen dem ersten Anschluss (3) und dem zweiten Anschluss (4) erstreckt;
einen Kolben (5), der sich in dem Fluidweg zwischen dem ersten Anschluss (3) und dem zweiten Anschluss (4) befindet, wobei der Kolben (5) selektiv und linear zwischen einer geschlossenen Position, die den Fluidweg zwischen dem ersten Anschluss (3) und dem zweiten Anschluss (4) verschließt, und einer offenen Position, die den Fluidweg zwischen dem ersten Anschluss (3) und dem zweiten Anschluss (4) öffnet, beweglich ist;
eine Ventilsitzbaugruppe (6), die sich in dem Fluidweg zwischen dem ersten Anschluss (3) und dem zweiten Anschluss (4) befindet, wobei die Ventilsitzbaugruppe (6) Folgendes umfasst:

   eine Dichtung (12) und einen Rahmen (13), wobei der Rahmen (13) einen Sitz (15) aufweist;
   wobei sich die Dichtung (12) von dem Adapter (14a-14e) unterscheidet und sich von dem Sitz (15) unterscheidet;
   wobei der Adapter (14a-14e) eine erste Öffnung aufweist, wobei die erste Öffnung einen ersten Durchmesser aufweist und wobei die Dichtung (12) eine zweite Öffnung aufweist, wobei die zweite Öffnung einen zweiten Durchmesser aufweist;
   wobei der erste Durchmesser größer als der zweite Durchmesser ist;
   wobei in der offenen Position der Kolben (5) von der Dichtung (12) losgelöst ist, um einen Fluidstrom durch die zweite Öffnung und entlang des Fluidwegs zu ermöglichen;
   wobei der Kolben (5) in der geschlossenen Position an der Dichtung (12) anliegt, um den Fluidstrom durch die zweite Öffnung und entlang des Fluidwegs zu verhindern;
   wobei der Sitz (15) eine Sitzoberfläche umfasst;
   **dadurch gekennzeichnet, dass**
   mindestens ein erster Vorsprung (18a, 18b; 19a, 19b; 20a, 20b) von der Sitzoberfläche vorsteht und sich in die Dichtung (12) einbettet; und
   die Dichtung (12) zwischen dem Adapter (14a-14e) und dem Sitz (15) eingefügt ist.

2. Das Ventil (1) nach Anspruch 1, wobei der mindestens eine erste Vorsprung (18a, 18b; 19a, 19b; 20a, 20b) mindestens eines von Folgendem umfasst:

   - eine erste Kante (18a, 18b; 19a, 19b; 20a, 20b),
   - eine erste ringförmige Kante (18a, 18b; 19a, 19b; 20a, 20b),
   - eine erste kreisförmige Kante (18a, 18b; 19a, 19b; 20a, 20b),

- einen ersten Rand (18a, 18b; 19a, 19b; 20a, 20b),
- einen ersten ringförmigen Rand (18a, 18b; 19a, 19b; 20a, 20b),
- einen ersten kreisförmigen Rand (18a, 18b; 19a, 19b; 20a, 20b).

3. Das Ventil (1) nach einem der Ansprüche 1 bis 2, wobei der mindestens eine erste Vorsprung (18a, 18b; 19a, 19b; 20a, 20b) mindestens 0,2 Millimeter von der Oberfläche des Sitzes (15) vorsteht.

4. Das Ventil (1) nach einem der Ansprüche 1 bis 3, wobei der mindestens eine erste Vorsprung (18a, 18b; 19a, 19b; 20a, 20b) in der Oberfläche des Sitzes (15) ausgebildet ist.

5. Das Ventil (1) nach einem der Ansprüche 1 bis 4, wobei der mindestens eine erste Vorsprung (18a, 18b; 19a, 19b; 20a, 20b) ein Ende umfasst, das zu der Dichtung (12) weist;

   wobei sich der mindestens eine erste Vorsprung (18a, 18b; 19a, 19b; 20a, 20b) zu seinem Ende hin in einem stumpfen Winkel verjüngt; und wobei der stumpfe Winkel zwischen 105° und 150° beträgt.

6. Das Ventil (1) nach einem der Ansprüche 1 bis 5, wobei die Oberfläche des Sitzes (15) einen ersten Abschnitt (16a, 16b; 17a, 17b) umfasst und wobei die Oberfläche der Dichtung (12) einen ersten Abschnitt umfasst;

   wobei der erste Abschnitt (16a, 16b; 17a, 17b) der Oberfläche des Sitzes (15) und der erste Abschnitt der Oberfläche der Dichtung (12) jeweils im Wesentlichen senkrecht zu einer Achse stehen, die durch eine lineare Bewegung des Kolbens (5) definiert ist; und wobei der erste Abschnitt (16a, 16b; 17a, 17b) der Oberfläche des Sitzes (15) an dem ersten Abschnitt der Oberfläche der Dichtung (12) anliegt.

7. Das Ventil (1) nach Anspruch 6, wobei der erste Abschnitt (16a, 16b; 17a, 17b) der Oberfläche des Sitzes (15) flach ist; und wobei der erste Abschnitt der Oberfläche der Dichtung (12) flach ist.

8. Das Ventil (1) nach einem der Ansprüche 6 bis 7, wobei der erste Abschnitt (16a, 16b; 17a, 17b) der Oberfläche des Sitzes (15) im Wesentlichen parallel zu dem ersten Abschnitt der Oberfläche der Dichtung (12) verläuft.

9. Das Ventil (1) nach einem der Ansprüche 1 bis 8, wobei die Oberfläche des Sitzes (15) einen zweiten Abschnitt (17a, 17b; 16a, 16b) umfasst und wobei die Oberfläche der Dichtung (12) einen zweiten Abschnitt umfasst;

   wobei sich der zweite Abschnitt (17a, 17b; 16a, 16b) der Oberfläche des Sitzes (15) von dem ersten Abschnitt (16a, 16b; 17a, 17b) der Oberfläche des Sitzes (15) unterscheidet; wobei sich der zweite Abschnitt der Oberfläche der Dichtung (12) von dem ersten Abschnitt der Oberfläche der Dichtung (12) unterscheidet; wobei der zweite Abschnitt (17a, 17b; 16a, 16b) der Oberfläche des Sitzes (15) und der zweite Abschnitt der Oberfläche der Dichtung (12) jeweils im Wesentlichen senkrecht zu einer oder zu der Achse stehen, die durch eine oder durch die lineare Bewegung des Kolbens (5) definiert ist; und wobei der zweite Abschnitt (17a, 17b; 16a, 16b) der Oberfläche des Sitzes (15) an dem zweiten Abschnitt der Oberfläche der Dichtung (12) anliegt.

10. Das Ventil (1) nach Anspruch 9, wobei der zweite Abschnitt (17a, 17b; 16a, 16b) der Oberfläche des Sitzes (15) flach ist; und wobei der zweite Abschnitt der Oberfläche der Dichtung (12) flach ist.

11. Das Ventil (1) nach einem der Ansprüche 9 bis 10, wobei der zweite Abschnitt (17a, 17b; 16a, 16b) der Oberfläche des Sitzes (15) im Wesentlichen parallel zu dem zweiten Abschnitt der Oberfläche der Dichtung (12) verläuft.

12. Das Ventil (1) nach den Ansprüchen 6 und 9, wobei der mindestens eine erste Vorsprung (18a, 18b; 19a, 19b; 20a, 20b) zwischen dem ersten Abschnitt (16a, 16b; 17a, 17b) der Oberfläche des Sitzes (15) und dem zweiten Abschnitt (17a, 17b; 16a, 16b) der Oberfläche des Sitzes (15) eingefügt ist.

13. Das Ventil (1) nach den Ansprüchen 6 und 9, wobei

    - der mindestens eine erste Vorsprung (18a, 18b; 19a, 19b; 20a, 20b) und
    - der erste Abschnitt (16a, 16b; 17a, 17b) der Oberfläche des Sitzes (15) und
    - der zweite Abschnitt (17a, 17b; 16a, 16b) der Oberfläche des Sitzes (15)

    eine Rotationssymmetrie um die Achse aufweisen, die durch die lineare Bewegung des Kolbens (5) definiert ist.

14. Das Ventil (1) nach den Ansprüchen 6 und 9, wobei

- der erste Abschnitt (16a, 16b; 17a, 17b) der Oberfläche des Sitzes (15) und
- der erste Abschnitt der Oberfläche der Dichtung (12) und
- der zweite Abschnitt (17a, 17b; 16a, 16b) der Oberfläche des Sitzes (15) und
- der zweite Abschnitt der Oberfläche der Dichtung (12) im Wesentlichen parallel zueinander verlaufen.

15. Das Ventil (1) nach einem der Ansprüche 1 bis 14, wobei mindestens ein zweiter Vorsprung (19a, 19b; 20a, 20b) von der Sitzoberfläche vorsteht und sich in die Dichtung (12) einbettet; und wobei sich der mindestens eine zweite Vorsprung (19a, 19b; 20a, 20b) von dem mindestens einen ersten Vorsprung (18a, 18b; 19a, 19b; 20a, 20b) unterscheidet.

## Revendications

1. Soupape (1) comprenant :
un adaptateur (14a - 14e), un premier orifice (3), un deuxième orifice (4) et un chemin de fluide s'étendant entre le premier orifice (3) et le deuxième orifice (4) ;

un piston (5) situé dans le chemin de fluide entre le premier orifice (3) et le deuxième orifice (4), le piston (5) étant mobile sélectivement et linéairement entre une position fermée qui ferme le trajet fluidique entre le premier orifice (3) et le deuxième orifice (4) et une position ouverte qui ouvre le chemin de fluide entre le premier orifice (3) et le deuxième orifice (4) ;
un ensemble siège de soupape (6) situé dans le chemin de fluide entre le premier orifice (3) et le deuxième orifice (4), l'ensemble siège de soupape (6) comprenant :

un joint (12) et un cadre (13), le cadre (13) ayant un siège (15) ;
dans laquelle le joint (12) est différent de l'adaptateur (14a - 14e) et est différent du siège (15) ;
dans laquelle l'adaptateur (14a - 14e) a une première ouverture, la première ouverture ayant un premier diamètre et dans laquelle le joint (12) a une deuxième ouverture, la deuxième ouverture ayant un deuxième diamètre ;

dans laquelle le premier diamètre est plus grand que le deuxième diamètre ;
dans laquelle, en position ouverte, le piston (5) est détaché du joint (12) pour permettre un écoulement d'un fluide à travers la deuxième ouverture et le long du chemin de fluide;
dans laquelle, en position fermée, le piston (5) vient en butée contre le joint (12) pour empêcher l'écoulement du fluide à travers la deuxième ouverture et le long du chemin de fluide;
dans laquelle le siège (15) comprend une surface de siège ;
**caractérisée en ce que**
au moins une première saillie (18a, 18b ; 19a, 19b ; 20a, 20b) fait saillie depuis la surface du siège et s'enfonce dans le joint (12) ; et
le joint (12) est interposé entre l'adaptateur (14a - 14e) et le siège (15).

2. La soupape (1) selon la revendication 1, dans laquelle la au moins une première saillie (18a, 18b ; 19a, 19b ; 20a, 20b) comprend au moins l'un des éléments suivants :

- une première arête (18a, 18b ; 19a, 19b ; 20a, 20b),
- une première arête annulaire (18a, 18b ; 19a, 19b ; 20a, 20b),
- une première arête circulaire (18a, 18b ; 19a, 19b ; 20a, 20b),
- un premier rebord (18a, 18b ; 19a, 19b ; 20a, 20b),
- un premier rebord annulaire (18a, 18b ; 19a, 19b ; 20a, 20b),
- un premier rebord circulaire (18a, 18b ; 19a, 19b ; 20a, 20b).

3. La soupape (1) selon l'une quelconque des revendications 1 à 2, dans laquelle la au moins une première saillie (18a, 18b ; 19a, 19b ; 20a, 20b) fait saillie d'au moins 0,2 millimètres de la surface du siège (15).

4. La soupape (1) selon l'une quelconque des revendications 1 à 3, dans laquelle la au moins une première saillie (18a, 18b ; 19a, 19b ; 20a, 20b) est formée dans la surface du siège (15).

5. La soupape (1) selon l'une quelconque des revendications 1 à 4, dans laquelle la au moins une première saillie (18a, 18b ; 19a, 19b ; 20a, 20b) comprend une extrémité pointant vers le joint (12) ;
dans laquelle la au moins une première saillie (18a, 18b ; 19a, 19b ; 20a, 20b) se rétrécit vers son extrémité selon un angle obtus ; et dans laquelle l'angle obtus est compris entre 105° et 150°.

6. La soupape (1) selon l'une quelconque des revendications 1 à 5, dans laquelle la surface du siège (15) comprend une première partie (16a, 16b ; 17a, 17b) et dans laquelle la surface du joint (12) comprend une première partie ;

dans laquelle la première partie (16a, 16b ; 17a, 17b) de la surface du siège (15) et la première partie de la surface du joint (12) sont chacune sensiblement perpendiculaires à un axe défini par un mouvement linéaire du piston (5) ; et dans laquelle la première partie (16a, 16b ; 17a, 17b) de la surface du siège (15) vient en butée contre la première partie de la surface du joint (12).

7. La soupape (1) selon la revendication 6, dans laquelle la première partie (16a, 16b ; 17a, 17b) de la surface du siège (15) est plane ; et dans laquelle la première partie de la surface du joint (12) est plane.

8. La soupape (1) selon l'une quelconque des revendications 6 à 7, dans laquelle la première partie (16a, 16b ; 17a, 17b) de la surface du siège (15) est sensiblement parallèle à la première partie de la surface du joint (12).

9. La soupape (1) selon l'une quelconque des revendications 1 à 8, dans laquelle la surface du siège (15) comprend une deuxième partie (17a, 17b ; 16a, 16b) et dans laquelle la surface du joint (12) comprend une deuxième partie ;

dans laquelle la deuxième partie (17a, 17b ; 16a, 16b) de la surface du siège (15) est différente de la première partie (16a, 16b ; 17a, 17b) de la surface du siège (15) ; dans laquelle la deuxième partie de la surface du joint (12) est différente de la première partie de la surface du joint (12) ; dans laquelle la deuxième partie (17a, 17b ; 16a, 16b) de la surface du siège (15) et la deuxième partie de la surface du joint (12) sont chacune sensiblement perpendiculaires à un ou à l'axe défini par un ou par le mouvement linéaire du piston (5) ; et dans laquelle la deuxième partie (17a, 17b ; 16a, 16b) de la surface du siège (15) vient en butée contre la deuxième partie de la surface du joint (12).

10. La soupape (1) selon la revendication 9, dans laquelle la deuxième partie (17a, 17b ; 16a, 16b) de la surface du siège (15) est plane ; et dans lequel la deuxième partie de la surface du joint (12) est plane.

11. La soupape (1) selon l'une quelconque des revendications 9 à 10, dans laquelle la deuxième partie (17a, 17b ; 16a, 16b) de la surface du siège (15) est sensiblement parallèle à la deuxième partie de la surface du joint (12).

12. La soupape (1) selon les revendications 6 et 9, dans laquelle la au moins une première saillie (18a, 18b ; 19a, 19b ; 20a, 20b) est interposée entre la première partie (16a, 16b ; 17a, 17b) de la surface du siège (15) et la deuxième partie (17a, 17b ; 16a, 16b) de la surface du siège (15).

13. La soupape (1) selon les revendications 6 et 9, dans laquelle

- la au moins une première saillie (18a, 18b ; 19a, 19b ; 20a, 20b) et
- la première partie (16a, 16b ; 17a, 17b) de la surface du siège (15) et
- la deuxième partie (17a, 17b ; 16a, 16b) de la surface du siège (15)

présentent une symétrie de rotation autour de l'axe défini par le mouvement linéaire du plongeur (5).

14. La soupape (1) selon les revendications 6 et 9, dans laquelle

- la première partie (16a, 16b ; 17a, 17b) de la surface du siège (15) et
- la première partie de la surface du joint (12) et
- la deuxième partie (17a, 17b ; 16a, 16b) de la surface du siège (15) et
- la deuxième partie de surface du joint (12) sont sensiblement parallèles entre elles.

15. La soupape (1) selon l'une quelconque des revendications 1 à 14, dans laquelle au moins une deuxième saillie (19a, 19b ; 20a, 20b) fait saillie depuis la surface du siège et s'enfonce dans le joint (12) ; et dans laquelle la au moins une deuxième saillie (19a, 19b ; 20a, 20b) est différente de la au moins une première saillie (18a, 18b ; 19a, 19b ; 20a, 20b).

FIG 1

FIG 2

FIG 3

16a 18a 17a          17b 18b 16b

15

4

FIG 4

18a, 18b

15

FIG 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6435207 B1
- WO 9825086 A1
- EP 3839308 A1
- US 5419365 A
- US 5730423 A
- CN 116906656 A, ZHEJIANG KEBO ELECTRICAL APPLIANCES CO LTD